(19)

**Europäisches Patentamt**
**European Patent Office**
**Office européen des brevets**

(11) **EP 4 554 155 A1**

(12) **EUROPEAN PATENT APPLICATION**
published in accordance with Art. 153(4) EPC

(43) Date of publication:
**14.05.2025 Bulletin 2025/20**

(21) Application number: **22950334.7**

(22) Date of filing: **05.07.2022**

(51) International Patent Classification (IPC):
**H04L 27/26** *(2006.01)* **H04L 5/00** *(2006.01)*
**H04B 7/0413** *(2017.01)*

(52) Cooperative Patent Classification (CPC):
**H04B 7/0413; H04L 5/00; H04L 27/26**

(86) International application number:
**PCT/KR2022/009696**

(87) International publication number:
**WO 2024/010108 (11.01.2024 Gazette 2024/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **LG Electronics Inc.**
**Yeongdeungpo-gu**
**Seoul 07336 (KR)**

(72) Inventors:
• **KIM, Byounggill**
  **Seoul 06772 (KR)**
• **KIM, Kijun**
  **Seoul 06772 (KR)**
• **LEE, Dongsun**
  **Seoul 06772 (KR)**
• **LEE, Jongku**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD FOR PERFORMING JOINT TRANSMISSION IN WIRELESS COMMUNICATION SYSTEM AND APPARATUS THEREFOR**

(57)     The present disclosure provides a method of receiving, by a user equipment (UE), downlink data in a wireless communication system. More specifically, the method comprises transmitting, to each of at least one access point (AP) performing a joint transmission, an uplink reference signal used for a received signal phase estimation at each of the at least one AP; receiving, from each of the at least one AP, a downlink reference signal based on an AP received signal phase value estimated based on the received signal phase estimation at each of the at least one AP; transmitting, to each of the at least one AP, information on a UE received signal phase value estimated based on the received signal phase estimation based on the downlink reference signal; and receiving, from each of the at least one AP, the downlink data based on (i) the AP received signal phase value and (ii) the UE received signal phase value.

[FIG. 25]

```
                    ( Start )
                        │
                        ▼
┌─────────────────────────────────────────────────────┐
│ Transmit, to each of at least one access point (AP)  │
│ performing joint transmission, an uplink reference   │── S2510
│ signal used for received signal phase estimation at  │
│ each of at least one AP                              │
└─────────────────────────────────────────────────────┘
                        │
                        ▼
┌─────────────────────────────────────────────────────┐
│ Receive, from each of at least one AP, a downlink    │
│ reference signal based on an AP received signal phase │── S2520
│ value estimated based on the received signal phase   │
│ estimation at each of at least one AP                │
└─────────────────────────────────────────────────────┘
                        │
                        ▼
┌─────────────────────────────────────────────────────┐
│ Transmit, to each of at least one AP, information on a│
│ UE received signal phase value estimated based on the │── S2530
│ received signal phase estimation based on the downlink│
│ reference signal                                      │
└─────────────────────────────────────────────────────┘
                        │
                        ▼
┌─────────────────────────────────────────────────────┐
│ Receive, from each of at least one AP, downlink data  │
│ based on (i) the AP received signal phase value and   │── S2540
│ (ii) the UE received signal phase value               │
└─────────────────────────────────────────────────────┘
                        │
                        ▼
                     ( End )
```

EP 4 554 155 A1

**Description**

[TECHNICAL FIELD]

The present disclosure relates to a wireless communication system, and more particularly to a method of performing a joint transmission and a device therefor.

[BACKGROUND]

Wireless communication systems are widely deployed to provide various types of communication services such as voice and data. In general, the wireless communication system is a multiple access system capable of supporting communication with multiple users by sharing available system resources (bandwidth, transmission power, etc.). Examples of the multiple access system include a Code Division Multiple Access (CDMA) system, a Frequency Division Multiple Access (FDMA) system, a Time Division Multiple Access (TDMA) system, a Space Division Multiple Access (SDMA) system, an Orthogonal Frequency Division Multiple Access (OFDMA) system, a Single Carrier Frequency Division Multiple Access (SC-FDMA) system, and an Interleave Division Multiple Access (IDMA) system.

[DISCLOSURE]

[TECHNICAL PROBLEM]

An object of the present disclosure is to provide a method of performing a joint transmission in a wireless communication system and a device therefor.

Another object of the present disclosure is to provide a method of performing a coherent joint transmission in a wireless communication system and a device therefor.

Another object of the present disclosure is to provide a method of synchronizing phases between APs performing a joint transmission when performing a coherent joint transmission in a wireless communication system and a device therefor.

Another object of the present disclosure is to provide a method of allowing a user equipment to enable coherent combining for received signals by synchronizing phases between APs performing a joint transmission when performing a coherent joint transmission in a wireless communication system and a device therefor.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

The present disclosure provides a method of performing a joint transmission in a wireless communication system and a device therefor.

More specifically, the present disclosure provides a method of receiving, by a user equipment (UE), downlink data in a wireless communication system, the method comprising transmitting, to each of at least one access point (AP) performing a joint transmission, an uplink reference signal used for a received signal phase estimation at each of the at least one AP; receiving, from each of the at least one AP, a downlink reference signal based on an AP received signal phase value estimated based on the received signal phase estimation at each of the at least one AP; transmitting, to each of the at least one AP, information on a UE received signal phase value estimated based on the received signal phase estimation based on the downlink reference signal; and receiving, from each of the at least one AP, the downlink data based on (i) the AP received signal phase value and (ii) the UE received signal phase value.

The downlink reference signal may be transmitted by applying the AP received signal phase value.

A phase value of the downlink reference signal applying the AP received signal phase value may be a phase value by rotating a phase value of the downlink reference signal before applying the AP received signal phase value by the AP received signal phase value.

The AP received signal phase value may be determined based on (i) a carrier phase of the UE, (ii) a phase of a transmission channel between the UE and the AP, and (iii) a carrier phase of the AP.

An uplink carrier phase and a downlink carrier phase of the UE may be the same, and an uplink carrier phase and a downlink carrier phase of the AP may be the same.

The AP received signal phase value may be determined by an equation below:

[Equation]

$$\phi AP\_n = \varphi UE - \varphi n + \theta n = -\Delta n + \theta n$$

where $\varphi UE$ denotes a carrier phase of the UE, $\theta n$ denotes a phase of a transmission channel between the UE and the AP, $\varphi n$ denotes a carrier phase of the AP, $\Delta n$ denotes a value by subtracting the carrier phase of the UE from the carrier phase of the AP, and 'n' denotes that the AP is an nth AP among the at least one AP performing the joint transmission, where 'n' is a natural number.

In the method,

[Equation]

$$\text{Phase value} = -\phi AP\_n + \varphi n = \Delta n - \theta n + \varphi n$$

the phase value of the downlink reference signal applying the AP received signal phase value may be determined by an equation above.

The UE received signal phase value may be determined by an equation below:

[Equation]

$$\text{Phase value} = \Delta n - \theta n + \varphi n + \theta n - \varphi UE = 2\Delta n$$

the information on the UE received signal phase value may include $2\Delta n$.

A phase correction value for a phase correction of the downlink data may be determined by an equation below based on (i) the AP received signal phase value and (ii) the UE received signal phase value:

[Equation]

$$\text{Phase value} = -(2\Delta n + \phi AP\_n) = -(2\Delta n - \Delta n + \theta n) = -(\Delta n + \theta n)$$

a reception phase at the UE of the downlink data that is transmitted with a corrected phase based on the phase correction value may be zero.

An uplink carrier phase and a downlink carrier phase of the UE may be different from each other, and an uplink carrier phase and a downlink carrier phase of the AP may be different from each other.

The AP received signal phase value may be determined by an equation below:

[Equation]

$$\phi AP\_n = \varphi UE,t - \varphi n,r + \theta n = \Delta n, UL + \theta n \quad (\Delta n, UL = \varphi UE,t - \varphi n,r)$$

where $\varphi UE,t$ denotes an uplink carrier phase of the UE, $\theta n$ denotes a phase of a transmission channel between the UE and the AP, $\varphi n,r$ denotes an uplink carrier phase of the AP, $\Delta n, UL$ denotes a value by subtracting the uplink carrier phase of the AP from the uplink carrier phase of the UE, and 'n' denotes that the AP is an nth AP among the at least one AP performing the joint transmission, where 'n' is a natural number.

In the method,

[Equation]

$$\text{Phase value} = -\phi AP\_n + \varphi n,t = -(\Delta n,UL + \theta n) + \varphi n,t$$

the phase value of the downlink reference signal applying the AP received signal phase value may be determined by an equation above.

The UE received signal phase value may be determined by an equation below:

$$\text{Phase value} = -(\Delta n, UL + \theta n) + \varphi n, t + \theta n - \varphi UE, r = \Delta n, DL - \Delta n, UL \ (\Delta n, DL = \varphi n, t - \varphi UE, r) \qquad \text{[Equation]}$$

where $\varphi UE,r$ denotes a downlink carrier phase of the UE, $\varphi n,t$ denotes a downlink carrier phase of the AP, and $\Delta n,DL$ denotes a value by subtracting the downlink carrier phase of the UE from the downlink carrier phase of the AP. The information on the UE received signal phase value may include $\Delta n,DL - \Delta n,UL$.

A phase correction value for a phase correction of the downlink data may be determined by an equation below based on (i) the AP received signal phase value and (ii) the UE received signal phase value.

$$\text{Phase value} = -(\Delta n,DL - \Delta n,UL + \phi AP\_n) = -(\Delta n,DL - \Delta n, UL + \Delta n, UL + \theta n) = -(\Delta n, DL + \theta n) \qquad \text{[Equation]}$$

a reception phase at the UE of the downlink data that is transmitted with a corrected phase based on the phase correction value may be zero.

A resource for the UE to transmit the information on the UE received signal phase value to one AP of the at least one AP may be determined based on a resource for the UE to receive the downlink reference signal from the one AP.

A resource for the UE to transmit the information on the UE received signal phase value to one AP of the at least one AP may be determined based on a resource for the UE to receive the downlink reference signal from the one AP.

The present disclosure provides a user equipment (UE) receiving downlink data in a wireless communication system, the UE comprising a transmitter configured to transmit a radio signal; a receiver configured to receive the radio signal; at least one processor; and at least one computer memory operably connectable to the at least one processor and configured to store instructions performing operations based on being executed by the at least one processor, wherein the operations comprise transmitting, to each of at least one access point (AP) performing a joint transmission, an uplink reference signal used for a received signal phase estimation at each of the at least one AP; receiving, from each of the at least one AP, a downlink reference signal based on an AP received signal phase value estimated based on the received signal phase estimation at each of the at least one AP; transmitting, to each of the at least one AP, information on a UE received signal phase value estimated based on the received signal phase estimation based on the downlink reference signal; and receiving, from each of the at least one AP, the downlink data based on (i) the AP received signal phase value and (ii) the UE received signal phase value.

The present disclosure provides a method of transmitting, by an access point (AP), downlink data in a wireless communication system, the method comprising receiving, from a user equipment (UE), an uplink reference signal used for a received signal phase estimation at the AP; transmitting, to the UE, a downlink reference signal based on an AP received signal phase value estimated based on the received signal phase estimation at the AP; receiving, from the UE, information on a UE received signal phase value estimated based on the received signal phase estimation based on the downlink reference signal; and transmitting, to the UE, the downlink data based on (i) the AP received signal phase value and (ii) the UE received signal phase value.

The present disclosure provides an access point (AP) transmitting downlink data in a wireless communication system, the AP comprising a transmitter configured to transmit a radio signal; a receiver configured to receive the radio signal; at least one processor; and at least one computer memory operably connectable to the at least one processor and configured to store instructions performing operations based on being executed by the at least one processor, wherein the operations comprise receiving, from a user equipment (UE), an uplink reference signal used for a received signal phase estimation at the AP; transmitting, to the UE, a downlink reference signal based on an AP received signal phase value estimated based on the received signal phase estimation at the AP; receiving, from the UE, information on a UE received signal phase value estimated based on the received signal phase estimation based on the downlink reference signal; and transmitting, to the UE, the downlink data based on (i) the AP received signal phase value and (ii) the UE received signal phase value.

The present disclosure provides a non-transitory computer readable medium (CRM) storing one or more instructions, wherein the one or more instructions executable by one or more processors are configured to allow a user equipment (UE) to transmit, to each of at least one access point (AP) performing a joint transmission, an uplink reference signal used for a received signal phase estimation at each of the at least one AP; receive, from each of the at least one AP, a downlink reference signal based on an AP received signal phase value estimated based on the received signal phase estimation at each of the at least one AP; transmit, to each of the at least one AP, information on a UE received signal phase value estimated based on the received signal phase estimation based on the downlink reference signal; and receive, from each of the at least one AP, downlink data based on (i) the AP received signal phase value and (ii) the UE received signal phase value.

The present disclosure provides a device comprising one or more memories and one or more processors operably connected to the one or more memories, wherein the one or more processors are configured to allow the device to transmit, to each of at least one access point (AP) performing a joint transmission, an uplink reference signal used for a received signal phase estimation at each of the at least one AP; receive, from each of the at least one AP, a downlink reference signal based on an AP received signal phase value estimated based on the received signal phase estimation at each of the at least one AP; transmit, to each of the at least one AP, information on a user equipment (UE) received signal phase value estimated based on the received signal phase estimation based on the downlink reference signal; and receive, from each of the at least one AP, downlink data based on (i) the AP received signal phase value and (ii) the UE received signal phase value.

[ADVANTAGEOUS EFFECTS]

The present disclosure has an effect of performing a joint transmission in a wireless communication system.
The present disclosure has an effect of performing a coherent joint transmission in a wireless communication system.
The present disclosure has an effect of synchronizing phases between APs performing a joint transmission when performing a coherent joint transmission in a wireless communication system.
The present disclosure has an effect of allowing a user equipment to enable coherent combining for received signals by synchronizing phases between APs performing a joint transmission when performing a coherent joint transmission in a wireless communication system.
The present disclosure has an effect of maximizing a signal gain through a joint transmission by allowing a user equipment to enable coherent combining for received signals when performing a coherent joint transmission in a wireless communication system.
Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 illustrates an example of a communication system applicable to the present disclosure.
FIG. 2 illustrates an example of a wireless apparatus applicable to the present disclosure.
FIG. 3 illustrates a method of processing a transmitted signal applicable to the present disclosure.
FIG. 4 illustrates another example of a wireless device applicable to the present disclosure.
FIG. 5 illustrates an example of a hand-held device applicable to the present disclosure.
FIG. 6 illustrates physical channels applicable to the present disclosure and a signal transmission method using the same.
FIG. 7 illustrates the structure of a radio frame applicable to the present disclosure.
FIG. 8 illustrates a slot structure applicable to the present disclosure.
FIG. 9 illustrates an example of a communication structure providable in a 6G system applicable to the present disclosure.
FIG. 10 illustrates an example of a D-MIMO system.
FIG. 11 illustrates an example of transmission and reception operations between UE-AP of a D-MIMO system.
FIG. 12 illustrates an example in which a UE performs a joint transmission with APs.
FIG. 13 illustrates an example of performing a coherent joint transmission method described in the present disclosure.
FIG. 14 illustrates an example of an operation in which an AP estimates a phase of a received signal when performing a coherent joint transmission method described in the present disclosure.

FIG. 15 illustrates an example of an operation in which an AP transmits a reference signal when performing a coherent joint transmission method described in the present disclosure.

FIG. 16 illustrates an example of an operation in which an AP transmits downlink data when performing a coherent joint transmission method described in the present disclosure.

FIG. 17 illustrates an example of a frame structure of a D-MIMO system according to a joint transmission method described in the present disclosure.

FIG. 18 illustrates another example of performing a coherent joint transmission method described in the present disclosure.

FIG. 19 illustrates an example of an operation in which an AP estimates a phase of a received signal when performing a coherent j oint transmission method described in the present disclosure.

FIG. 20 illustrates an example of an operation in which an AP transmits a reference signal when performing a coherent joint transmission method described in the present disclosure.

FIG. 21 illustrates an example of an operation in which an AP transmits downlink data when performing a coherent joint transmission method described in the present disclosure.

FIG. 22 illustrates another example of a frame structure of a D-MIMO system according to a joint transmission method described in the present disclosure.

FIG. 23 illustrates an example of performing a coherent joint transmission method described in the present disclosure.

FIG. 24 illustrates another example of a frame structure of a D-MIMO system according to a joint transmission method described in the present disclosure.

FIG. 25 is a flowchart illustrating an example in which a user equipment performs a method of performing a joint transmission described in the present disclosure.

FIG. 26 is a flowchart illustrating an example in which an AP performs a method of performing a joint transmission described in the present disclosure.

[Mode for Invention]

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a Base Station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an Advanced Base Station (ABS), an access point, etc.

In the embodiments of the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an UpLink (UL). Likewise, the mobile station may serve as a receiver and the BS may serve as a transmitter, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation(5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

Communication system applicable to the present disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

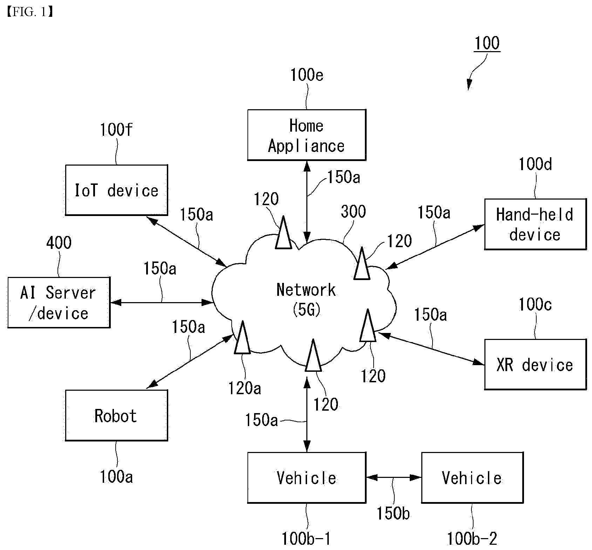

FIG. 1 illustrates an example of a communication system applicable to the present disclosure. Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network or a 5G (e.g., NR) network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/connections 150a, 150b and 150c may be established between the wireless devices 100a to 100f/the base station 120 and the base station 120/the base station 120. Here, wireless communication/connection may be established through various radio access technologies (e.g., 5G NR) such as uplink/downlink communication 150a, sidelink communication 150b (or D2D communication) or communication 150c between base stations (e.g., relay, integrated access backhaul (IAB). The wireless device and the base station/wireless device or the base station and the base station may transmit/receive radio signals to/from each other through wireless communication/connection 150a, 150b and 150c. For example, wireless communication/connection 150a, 150b and 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

Communication system applicable to the present disclosure

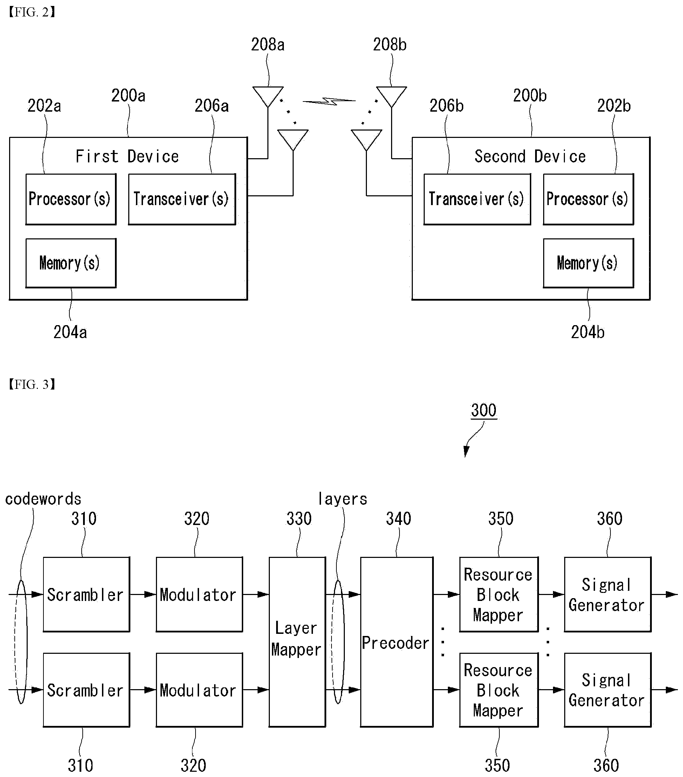

FIG. 2 illustrates an example of a wireless device applicable to the present disclosure.

Referring to FIG. 2, a first wireless device 200a and a second wireless device 200b may transmit and receive radio signals through various radio access technologies (e.g., LTE or NR). Here, {the first wireless device 200a, the second wireless device 200b} may correspond to {the wireless device 100x, the base station 120} and/or {the wireless device 100x, the wireless device 100x} of FIG. 1.

The first wireless device 200a may include one or more processors 202a and one or more memories 204a and may further include one or more transceivers 206a and/or one or more antennas 208a. The processor 202a may be configured to control the memory 204a and/or the transceiver 206a and to implement descriptions, functions, procedures, proposals, methods and/or operational flowcharts disclosed herein. For example, the processor 202a may process information in the memory 204a to generate first information/signal and then transmit a radio signal including the first information/signal through the transceiver 206a. In addition, the processor 202a may receive a radio signal including second information/signal through the transceiver 206a and then store information obtained from signal processing of the second information/signal in the memory 204a. The memory 204a may be connected with the processor 202a, and store a variety of information related to operation of the processor 202a. For example, the memory 204a may store software code including instructions for performing all or some of the processes controlled by the processor 202a or performing the descriptions, functions, procedures, proposals, methods and/or operational flowcharts disclosed herein. Here, the processor 202a and the memory 204a may be part of a communication modem/circuit/chip designed to implement wireless communication technology (e.g., LTE or NR). The transceiver 206a may be connected with the processor 202a to transmit and/or receive radio signals through one or more antennas 208a. The transceiver 206a may include a transmitter and/or a receiver. The transceiver 206a may be used interchangeably with a radio frequency (RF) unit. In the present disclosure, the wireless device may refer to a communication modem/circuit/chip.

The second wireless device 200b may include one or more processors 202b and one or more memories 204b and may further include one or more transceivers 206b and/or one or more antennas 208b. The processor 202b may be configured to control the memory 204b and/or the transceiver 206b and to implement the descriptions, functions, procedures, proposals, methods and/or operational flowcharts disclosed herein. For example, the processor 202b may process information in the memory 204b to generate third information/signal and then transmit the third information/signal through the transceiver 206b. In addition, the processor 202b may receive a radio signal including fourth information/signal through the transceiver 206b and then store information obtained from signal processing of the fourth information/signal in the memory 204b. The memory 204b may be connected with the processor 202b to store a variety of information related to operation of the processor 202b. For example, the memory 204b may store software code including instructions for performing all or some of the processes controlled by the processor 202b or performing the descriptions, functions, procedures, proposals, methods and/or operational flowcharts disclosed herein. Herein, the processor 202b and the memory 204b may be part of a communication modem/circuit/chip designed to implement wireless communication technology (e.g., LTE or NR). The transceiver 206b may be connected with the processor 202b to transmit and/or receive radio signals through one or more antennas 208b. The transceiver 206b may include a transmitter and/or a receiver. The transceiver 206b may be used interchangeably with a radio frequency (RF) unit. In the present disclosure, the wireless device may refer to a communication modem/circuit/chip.

Hereinafter, hardware elements of the wireless devices 200a and 200b will be described in greater detail. Without being limited thereto, one or more protocol layers may be implemented by one or more processors 202a and 202b. For example, one or more processors 202a and 202b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202a and 202b may generate one or more protocol data units (PDUs) and/or one or more service data unit (SDU) according to the descriptions, functions, procedures, proposals, methods and/or operational flowcharts disclosed herein. One or more processors 202a and 202b may generate messages, control information, data or information according to the descriptions, functions, procedures, proposals, methods and/or operational flowcharts disclosed herein. One or more processors 202a and 202b may generate PDUs, SDUs, messages, control information, data or information according to the functions, procedures, proposals and/or methods disclosed herein and provide the PDUs, SDUs, messages, control information, data or information to one or more transceivers 206a and 206b. One or more processors 202a and 202b may receive signals (e.g., baseband signals) from one or more transceivers 206a and 206b and acquire PDUs, SDUs, messages, control information, data or information according to the descriptions, functions, procedures, proposals, methods and/or operational flowcharts disclosed herein.

One or more processors 202a and 202b may be referred to as controllers, microcontrollers, microprocessors or microcomputers. One or more processors 202a and 202b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202a and 202b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202a and 202b or stored in one or more memories 204a and 204b to be driven by one or more processors 202a and 202b. The descriptions, functions, procedures, proposals, methods and/or operational flowcharts disclosed herein implemented using firmware or software in the form of code, a command and/or a set of commands.

One or more memories 204a and 204b may be connected with one or more processors 202a and 202b to store various types of data, signals, messages, information, programs, code, instructions and/or commands. One or more memories 204a and 204b may be composed of read only memories (ROMs), random access memories (RAMs), erasable programmable read only memories (EPROMs), flash memories, hard drives, registers, cache memories, computer-readable storage mediums and/or combinations thereof. One or more memories 204a and 204b may be located inside and/or outside one or more processors 202a and 202b. In addition, one or more memories 204a and 204b may be connected with one or more processors 202a and 202b through various technologies such as wired or wireless connection.

One or more transceivers 206a and 206b may transmit user data, control information, radio signals/channels, etc. described in the methods and/or operational flowcharts of the present disclosure to one or more other apparatuses. One or more transceivers 206a and 206b may receive user data, control information, radio signals/channels, etc. described in the methods and/or operational flowcharts of the present disclosure from one or more other apparatuses. For example, one or more transceivers 206a and 206b may be connected with one or more processors 202a and 202b to transmit/receive radio signals. For example, one or more processors 202a and 202b may perform control such that one or more transceivers 206a and 206b transmit user data, control information or radio signals to one or more other apparatuses. In addition, one or more processors 202a and 202b may perform control such that one or more transceivers 206a and 206b receive user data, control information or radio signals from one or more other apparatuses. In addition, one or more transceivers 206a and 206b may be connected with one or more antennas 208a and 208b, and one or more transceivers 206a and 206b may be configured to transmit/receive user data, control information, radio signals/channels, etc. described in the descriptions, functions, procedures, proposals, methods and/or operational flowcharts disclosed herein through one or more antennas 208a and 208b. In the present disclosure, one or more antennas may be a plurality of physical antennas or a plurality of logical antennas (e.g., antenna ports). One or more transceivers 206a and 206b may convert the received radio signals/channels, etc. from RF band signals to baseband signals, in order to process the received user data, control information, radio signals/channels, etc. using one or more processors 202a and 202b. One or more transceivers 206a and 206b may convert the user data, control information, radio signals/channels processed using one or more processors 202a and 202b from baseband signals into RF band signals. To this end, one or more transceivers 206a and 206b may include (analog) oscillator and/or filters.

FIG. 3 illustrates a method of processing a transmitted signal applicable to the present disclosure. For example, the transmitted signal may be processed by a signal processing circuit. At this time, a signal processing circuit 300 may include a scrambler 310, a modulator 320, a layer mapper 330, a precoder 340, a resource mapper 350, and a signal generator 360. At this time, for example, the operation/function of FIG. 3 may be performed by the processors 202a and 202b and/or the transceiver 206a and 206b of FIG. 2. In addition, for example, the hardware element of FIG. 3 may be implemented in the processors 202a and 202b of FIG. 2 and/or the transceivers 206a and 206b of FIG. 2. For example, blocks 1010 to 1060 may be implemented in the processors 202a and 202b of FIG. 2. In addition, blocks 310 to 350 may be implemented in the processors 202a and 202b of FIG. 2 and a block 360 may be implemented in the transceivers 206a and 206b of FIG. 2, without being limited to the above-described embodiments.

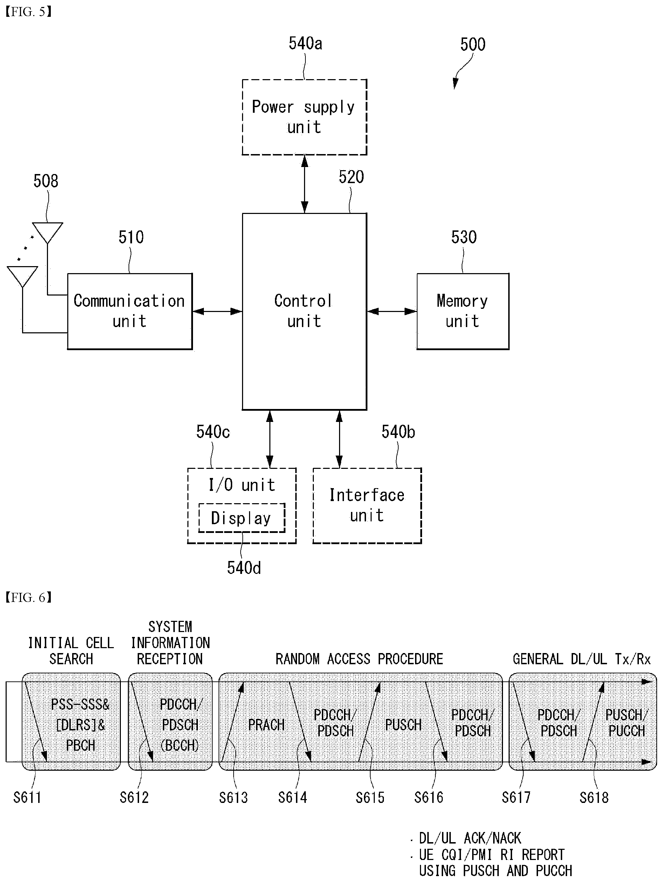

A codeword may be converted into a radio signal through the signal processing circuit 300 of FIG. 3. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH) of FIG. 6. Specifically, the codeword may be converted into a bit sequence scrambled by the scrambler 310. The scramble sequence used for scramble is generated based in an initial value and the initial value may include ID information of a wireless device, etc. The scrambled bit sequence may be modulated into a modulated symbol sequence by the modulator 320. The modulation method may include pi/2-binary phase shift keying (pi/2-BPSK), m-phase shift keying (m-PSK), m-quadrature amplitude modulation (m-QAM), etc.

A complex modulation symbol sequence may be mapped to one or more transport layer by the layer mapper 330. Modulation symbols of each transport layer may be mapped to corresponding antenna port(s) by the precoder 340 (precoding). The output z of the precoder 340 may be obtained by multiplying the output y of the layer mapper 330 by an N*M precoding matrix W. Here, N may be the number of antenna ports and M may be the number of transport layers. Here, the precoder 340 may perform precoding after transform precoding (e.g., discrete Fourier transform (DFT)) for complex modulation symbols. In addition, the precoder 340 may perform precoding without performing transform precoding.

The resource mapper 350 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 360 may generate a radio signal from the mapped modulation symbols, and the generated radio signal may be transmitted to another device through each antenna. To this end, the signal generator 360 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 310 to 360 of FIG. 3. For example, the wireless device (e.g., 200a or 200b of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a de-scrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

## Structure of wireless device applicable to the present disclosure

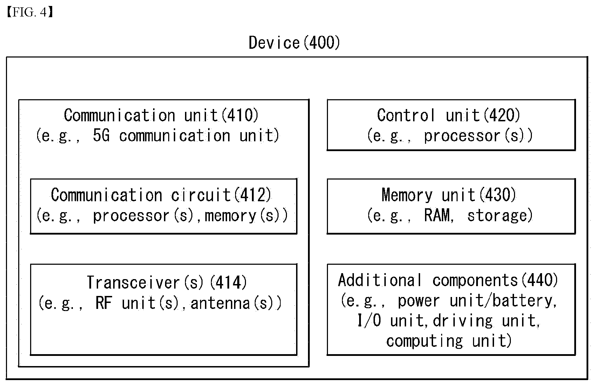

FIG. 4 illustrates another example of a wireless device applicable to the present disclosure.

Referring to FIG. 4, a wireless device 400 may correspond to the wireless devices 200a and 200b of FIG. 2 and include various elements, components, units/portions and/or modules. For example, the wireless device 300 may include a communication unit 410, a control unit (controller) 420, a memory unit (memory) 430 and additional components 440. The communication unit may include a communication circuit 412 and a transceiver(s) 414. For example, the communication circuit 412 may include one or more processors 202a and 202b and/or one or more memories 204a and 204b of FIG. 2. For example, the transceiver(s) 414 may include one or more transceivers 206a and 206b and/or one or more antennas 208a and 208b of FIG. 2. The control unit 420 may be electrically connected with the communication unit 410, the memory unit 430 and the additional components 440 to control overall operation of the wireless device. For example, the control unit 420 may control electrical/mechanical operation of the wireless device based on a program/code/instruction/information stored in the memory unit 430. In addition, the control unit 420 may transmit the information stored in the memory unit 430 to the outside (e.g., another communication device) through the wireless/wired interface using the communication unit 410 over a wireless/wired interface or store information received from the outside (e.g., another communication device) through the wireless/wired interface using the communication unit 410 in the memory unit 430.

The additional components 440 may be variously configured according to the types of the wireless devices. For example, the additional components 440 may include at least one of a power unit/battery, an input/output unit, a driving unit or a computing unit. Without being limited thereto, the wireless device 300 may be implemented in the form of the robot (FIG. 1, 100a), the vehicles (FIG. 1, 100b-1 and 100b-2), the XR device (FIG. 1, 100c), the hand-held device (FIG. 1, 100d), the home appliance (FIG. 1, 100e), the IoT device (FIG. 1, 100f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.

In FIG. 4, various elements, components, units/portions and/or modules in the wireless device 400 may be connected with each other through wired interfaces or at least some thereof may be wirelessly connected through the communication unit 410. For example, in the wireless device 400, the control unit 420 and the communication unit 410 may be connected by wire, and the control unit 420 and the first unit (e.g., 130 or 140) may be wirelessly connected through the communication unit 410. In addition, each element, component, unit/portion and/or module of the wireless device 400 may further include one or more elements. For example, the control unit 420 may be composed of a set of one or more processors. For example, the control unit 420 may be composed of a set of a communication control processor, an application processor, an electronic control unit (ECU), a graphic processing processor, a memory control processor, etc. In another example, the memory unit 430 may be composed of a random access memory (RAM), a dynamic RAM (DRAM), a read only memory (ROM), a flash memory, a volatile memory, a non-volatile memory and/or a combination thereof.

**Hand-held device applicable to the present disclosure**

FIG. 5 illustrates an example of a hand-held device applicable to the present disclosure.

FIG. 5 illustrates a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 5, the hand-held device 400 may include an antenna unit (antenna) 508, a communication unit (transceiver) 510, a control unit (controller) 520, a memory unit (memory) 530, a power supply unit (power supply) 540a, an interface unit (interface) 540b, and an input/output unit 540c. An antenna unit (antenna) 508 may be part of the communication unit 510. The blocks 510 to 530/540a to 540c may correspond to the blocks 410 to 430/440 of FIG. 4, respectively.

The communication unit 510 may transmit and receive signals (e.g., data, control signals, etc.) to and from other wireless devices or base stations. The control unit 520 may control the components of the hand-held device 500 to perform various operations. The control unit 520 may include an application processor (AP). The memory unit 530 may store data/parameters/program/code/instructions necessary to drive the hand-held device 400. In addition, the memory unit 530 may store input/output data/information, etc. The power supply unit 540a may supply power to the hand-held device 500 and include a wired/wireless charging circuit, a battery, etc. The interface unit 540b may support connection between the hand-held device 500 and another external device. The interface unit 540b may include various ports (e.g., an audio input/output port and a video input/output port) for connection with the external device. The input/output unit 540c may receive or output video information/signals, audio information/signals, data and/or user input information. The input/output unit 540c may include a camera, a microphone, a user input unit, a display 540d, a speaker and/or a haptic module.

For example, in case of data communication, the input/output unit 540c may acquire user input information/signal (e.g., touch, text, voice, image or video) from the user and store the user input information/signal in the memory unit 530. The communication unit 510 may convert the information/signal stored in the memory into a radio signal and transmit the converted radio signal to another wireless device directly or transmit the converted radio signal to a base station. In addition, the communication unit 510 may receive a radio signal from another wireless device or the base station and then restore the received radio signal into original information/signal. The restored information/signal may be stored in the memory unit 530 and then output through the input/output unit 540c in various forms (e.g., text, voice, image, video and haptic).

**Physical channels and general signal transmission**

In a radio access system, a UE receives information from a base station on a DL and transmits information to the base station on a UL. The information transmitted and received between the UE and the base station includes general data information and a variety of control information. There are many physical channels according to the types/usages of information transmitted and received between the base station and the UE.

FIG. 6 illustrates physical channels applicable to the present disclosure and a signal transmission method using the same.

The UE which is turned on again in a state of being turned off or has newly entered a cell performs initial cell search operation in step S611 such as acquisition of synchronization with a base station. Specifically, the UE performs synchronization with the base station, by receiving a Primary Synchronization Channel (P-SCH) and a Secondary Synchronization Channel (S-SCH) from the base station, and acquires information such as a cell Identifier (ID).

Thereafter, the UE may receive a physical broadcast channel (PBCH) signal from the base station and acquire intra-cell broadcast information. Meanwhile, the UE may receive a downlink reference signal (DL RS) in an initial cell search step and check a downlink channel state. The UE which has completed initial cell search may receive a physical downlink control channel (PDCCH) and a physical downlink control channel (PDSCH) according to physical downlink control channel information in step S612, thereby acquiring more detailed system information.

Thereafter, the UE may perform a random access procedure such as steps S613 to S616 in order to complete access to the base station. To this end, the UE may transmit a preamble through a physical random access channel (PRACH) (S613) and receive a random access response (RAR) to the preamble through a physical downlink control channel and a physical downlink shared channel corresponding thereto (S614). The UE may transmit a physical uplink shared channel (PUSCH) using scheduling information in the RAR (S615) and perform a contention resolution procedure such as reception of a physical downlink control channel signal and a physical downlink shared channel signal corresponding thereto (S616).

The UE, which has performed the above-described procedures, may perform reception of a physical downlink control channel signal and/or a physical downlink shared channel signal (S617) and transmission of a physical uplink shared channel (PUSCH) signal and/or a physical uplink control channel (PUCCH) signal (S618) as general uplink/-downlink signal transmission procedures.

The control information transmitted from the UE to the base station is collectively referred to as uplink control information (UCI). The UCI includes hybrid automatic repeat and request acknowledgement/negative-ACK (HARQ-ACK/NACK), scheduling request (SR), channel quality indication (CQI), precoding matrix indication (PMI), rank indication (RI), beam indication (BI) information, etc. At this time, the UCI is generally periodically transmitted through a PUCCH, but may be transmitted through a PUSCH in some embodiments (e.g., when control information and traffic data are simultaneously transmitted). In addition, the UE may aperiodically transmit UCI through a PUSCH according to a request/instruction of a network.

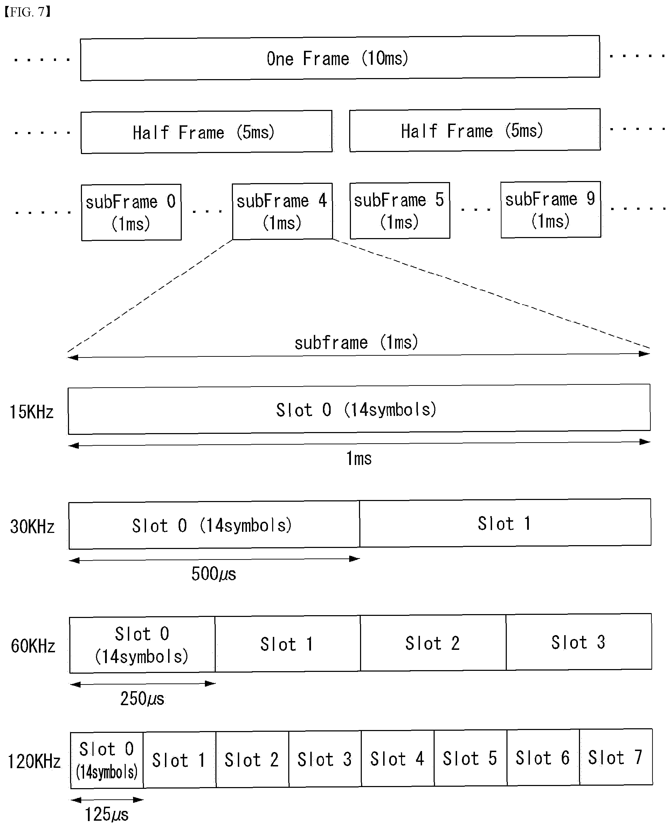

FIG. 7 illustrates the structure of a radio frame applicable to the present disclosure.

UL and DL transmission based on an NR system may be based on the frame shown in FIG. 7. At this time, one radio frame has a length of 10 ms and may be defined as two 5-ms half-frames (HFs). One half-frame may be defined as five 1-ms subframes (SFs). One subframe may be divided into one or more slots and the number of slots in the subframe may depend on subscriber spacing (SCS). At this time, each slot may include 12 or 14 OFDM(A) symbols according to cyclic prefix (CP). If normal CP is used, each slot may include 14 symbols. If an extended CP is used, each slot may include 12 symbols. Here, the symbol may include an OFDM symbol (or a CP-OFDM symbol) and an SC-FDMA symbol (or a DFT-s-OFDM symbol).

Table 1 shows the number of symbols per slot according to SCS, the number of slots per frame and the number of slots per subframe when normal CP is used, and Table 2 shows the number of symbols per slot according to SCS, the number of slots per frame and the number of slots per subframe when extended CP is used.

[Table 1]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Table 2]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

In Tables 1 and 2 above, $N_{\text{symb}}^{\text{slot}}$ may indicate the number of symbols in a slot, $N_{\text{slot}}^{\text{frame},\mu}$ may indicate the number of slots in a frame, and $N_{\text{slot}}^{\text{subframe},\mu}$ may indicate the number of slots in a subframe.

In addition, in a system, to which the present disclosure is applicable, OFDM(A) numerology (e.g., SCS, CP length, etc.) may be differently set among a plurality of cells merged to one UE. Accordingly, an (absolute time) period of a time resource (e.g., an SF, a slot or a TTI) (for convenience, collectively referred to as a time unit (TU)) composed of the same number of symbols may be differently set between merged cells.

NR may support a plurality of numerologies (or subscriber spacings (SCSs)) supporting various 5G services. For example, a wide area in traditional cellular bands is supported when the SCS is 15 kHz, dense-urban, lower latency and wider carrier bandwidth are supported when the SCS is 30 kHz/60 kHz, and bandwidth greater than 24.25 GHz may be supported to overcome phase noise when the SCS is 60 kHz or higher.

An NR frequency band is defined as two types (FR1 and FR2) of frequency ranges. FR1 and FR2 may be configured as shown in the following table. In addition, FR2 may mean millimeter wave (mmW).

[Table 3]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

In addition, for example, in a communication system, to which the present disclosure is applicable, the above-described numerology may be differently set. For example, a terahertz wave (THz) band may be used as a frequency band higher than FR2. In the THz band, the SCS may be set greater than that of the NR system, and the number of slots may be differently set, without being limited to the above-described embodiments.

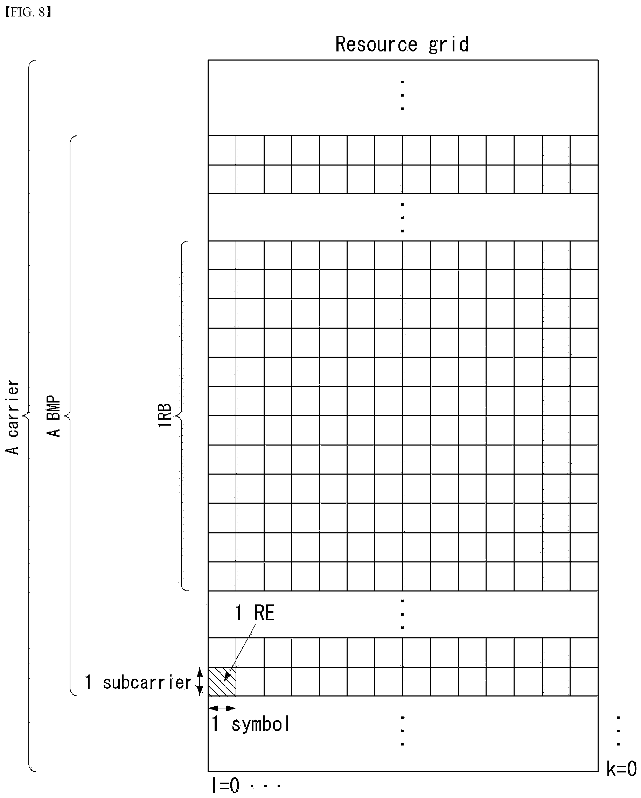

FIG. 8 illustrates a slot structure applicable to the present disclosure.

One slot includes a plurality of symbols in the time domain. For example, one slot includes seven symbols in case of normal CP and one slot includes six symbols in case of extended CP. A carrier includes a plurality of subcarriers in the frequency domain. A resource block (RB) may be defined as a plurality (e.g., 12) of consecutive subcarriers in the frequency domain.

In addition, a bandwidth part (BWP) is defined as a plurality of consecutive (P)RBs in the frequency domain and may correspond to one numerology (e.g., SCS, CP length, etc.).

The carrier may include a maximum of N (e.g., five) BWPs. Data communication is performed through an activated BWP and only one BWP may be activated for one UE. In resource grid, each element is referred to as a resource element (RE) and one complex symbol may be mapped

## 6G communication system

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

[Table 4]

| | |
|---|---|
| **Per device peak data rate** | 1 Tbps |
| **E2E latency** | 1 ms |
| **Maximum spectral efficiency** | 100bps/Hz |
| **Mobility support** | Up to 1000km/hr |
| **Satellite integration** | Fully |
| **AI** | Fully |
| **Autonomous vehicle** | Fully |
| **XR** | Fully |
| **Haptic Communication** | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

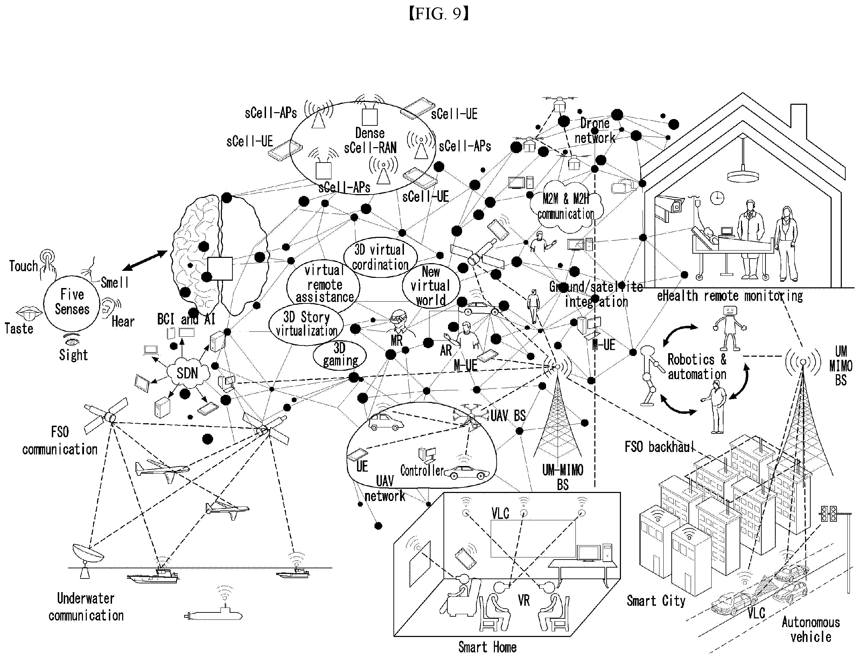

FIG. 9 illustrates an example of a communication structure providable in a 6G system applicable to the present disclosure.

Referring to FIG. 9, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduce costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

The present disclosure proposes a method of synchronizing phases between access points (APs) performing joint transmission for coherent joint transmission in a distributed massive MIMO (D-MIMO) system.

**Term Definition**

For convenience of explanation, the following symbols/abbreviations/terms can be used interchangeably in the present disclosure.

- D-MIMO: Distributed massive Multiple Input Multiple Output
- AP: Access Point
- CPU: Central Processing Unit
- CSI: Channel State Information
- UE: User Equipment

Below, a D-MIMO system and a joint transmission are first described to help understanding of a method described in the present disclosure.

**D-MIMO System**

A D-MIMO system refers to a system in which "a large number of geographically distributed antennas cooperate to serve a small number of UEs using a single time-frequency resource with the help of a fronthaul network and a central processing unit (CPU)." There is no cell boundary in the traditional sense in the D-MIMO system, and all APs on the D-MIMO system operate as if the APs are in the same cell. In the initial development of a D-MIMO system concept, the D-MIMO system has been designed such that all the APs serve all the UEs. However, in this case, APs that are far away from the UEs use only transmission power without contributing to the signal quality of the UEs, thereby leading to a problem of a reduction in system efficiency. To solve the problem, the concept of a user-centric cluster has been introduced, in which only APs positioned close to the UEs are designed to provide services to the UEs. In the D-MIMO system, it is assumed that uplink and downlink are multiplexed in a time domain, and the number of APs is very large compared to the number of UEs.

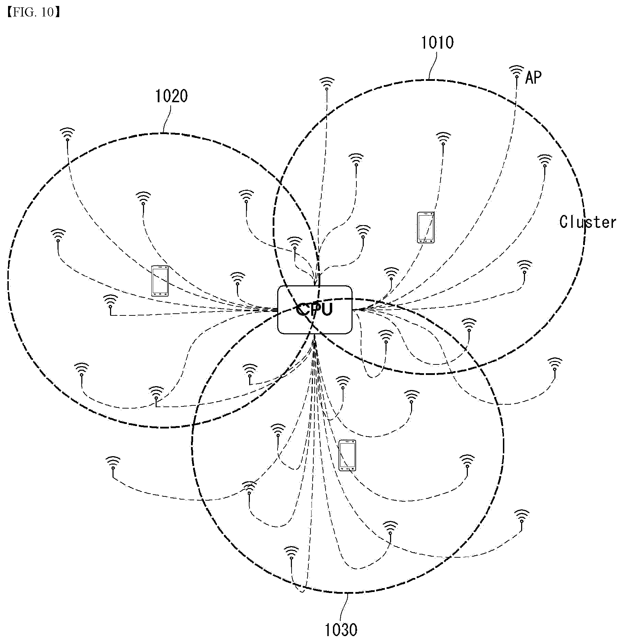

FIG. 10 illustrates an example of a D-MIMO system. Referring to FIG. 10, it can be seen that the D-MIMO system is constructed by a significantly larger number of APs than the number of UEs. Here, user-centric clusters 1010, 1020 and 1030 are configured so that only APs positioned close to the UEs can provide services to the UEs. In addition, a CPU decodes data by combining data generated by each AP.

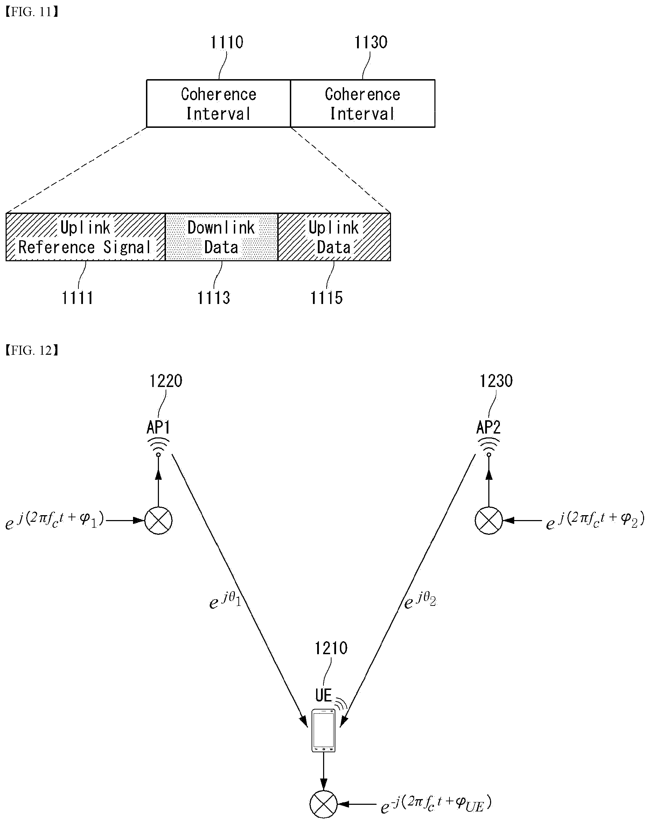

FIG. 11 illustrates an example of transmission and reception operations between UE-AP of a D-MIMO system. Referring to FIG. 11, transmission and reception operations of the D-MIMO system may include three steps of (1) an uplink channel estimation 1111, (2) a downlink data transmission 1113, and (3) an uplink data transmission 1115. In the D-MIMO system, it is assumed that the operations are performed in coherence times 1110 and 1130 of a channel, and the channel remains the same while the operations are performed. Further, in the D-MIMO system, it is assumed that a channel reciprocity property is established in which an uplink channel and a downlink channel are the same. The operations (1) to (3) are described in more detail.

(1) Uplink Channel Estimation (1111)

A UE transmits an assigned reference signal to each of APs performing a joint transmission with the UE. Then, the respective APs receive the reference signal transmitted by the UE, and the respective APs estimate a channel between the UE and the AP based on the received reference signal.

(2) Downlink Data Transmission (1113)

The respective APs perform channel-matched precoding using the estimated channel. That is, the respective APs multiply downlink data to be transmitted to the UE by a conjugate complex number of the channel estimated in the uplink. The precoded downlink data is received by the UE with the channel offset by the precoding while passing through the channel. Therefore, the downlink data transmitted from each AP is received in-phase by the UE.

(3) Uplink Data Transmission (1115)

The UE transmits uplink data to each AP without precoding. The respective APs receive the uplink data transmitted without precoding, and generates an estimated value of the received uplink data using the channel estimated in the (1) uplink channel estimation (1111). A CPU decodes the data by combining the estimated values generated by each AP.

**Joint Transmission**

A method in which one or more APs cooperatively transmit data to a UE is referred to as joint transmission or combining transmission. The joint transmission can improve the quality of signals received by the UE through the joint transmission and can reduce interference from signals transmitted to another UE. For a joint transmission operation, data and panel information (CSI) to be transmitted to the UE need to be shared between geographically distributed APs performing the joint transmission. To this end, high backhaul connection performance is required, such as low transmission delay and large transmission capacity of the backhaul connection between the APs.

A joint transmission method is divided into a non-coherent joint transmission method and a coherent joint transmission method. The non-coherent joint transmission is a method in which the respective APs transmit the same data by sharing it, but precoding is performed independently on each AP. Therefore, in the non-coherent joint transmission, the UE can only obtain a power gain. On the other hand, the coherent joint transmission is a method in which the APs receive channel information (CSI) from the UE and perform precoding so that downlink signals transmitted by the respective APs to the UE are coherently combined at the UE. In the coherent joint transmission, the UE can obtain an additional signal gain since the signals transmitted by the respective APs to the UE are coherently combined at the UE, in addition to the power gain.

As described above, the coherent joint transmission is a method of transmitting signals transmitted by multiple APs to a UE so that the signals can be coherently combined at the UE. To coherently combine the signals at the UE, frequency, time, and phases between the APs transmitting the signals to the UE need to be synchronized. In particular, for the coherent combining, it may be important that the phases between the APs are synchronized. If APs performing joint transmission are located in the same location and can use the same carrier signal source, it can be automatically considered that phases between the APs are synchronized. That is, it can be automatically seen that the phases between the APs are synchronized. However, in a D-MIMO system, it is not possible to supply all the signals generated from the same carrier signal source to the APs because the APs performing joint transmission are geographically distributed, which should involve an operation for synchronizing the phases between the carrier signal sources of the respective APs.

FIG. 12 illustrates an example in which a UE performs a joint transmission with APs. More specifically, FIG. 12 illustrates an example in which a UE receives signals from two APs. In FIG. 12, it is assumed that AP1 1220 and AP2 1230 are frequency and time synchronized, and the AP1 and the AP2 transmit the same signal on downlink. In FIG. 12, carrier phases of the AP1 1220 and the AP2 1230 are respectively $\varphi 1$ and $\varphi 2$, phases of channels between the AP1 1220 and the AP2 1230 and a UE 1210 are respectively $\theta 1$ and $\theta 2$, and a carrier phase of the UE 1210 is $\varphi UE$.

In this instance, a phase of a signal that is transmitted by the AP1 1220 and is received by the UE 1210 is the same as Equation 1 below.

【Equation 1】

$$\varphi r1 = \varphi 1 + \theta 1 - \varphi UE$$

Further, a phase of a signal that is transmitted by the AP2 1230 and is received by the UE 1210 is the same as Equation 2 below.

【Equation 2】

$$\varphi r2 = \varphi 2 + \theta 2 - \varphi UE$$

In order for the signals received by the UE 1210 from each of the APs 1220 and 1230 to be coherently combined, reception phases $\varphi r1$ and $\varphi r2$ of the signals received by the UE 1210 from each of the APs 1220 and 1230 must be corrected to have the same value.

Below, a method is specifically described to enable signals transmitted by multiple APs to a UE to be coherently combined at the UE in a coherent joint transmission.

### Coherent joint transmission method for coherent combining of received signals at UE

A coherent joint transmission method for coherent combining of received signals at a UE described in the present disclosure may be performed based on uplink and may also be performed based on downlink. That is, a phase correction for the coherent combining of received signals at the UE may be performed based on uplink and may also be performed based on downlink.

### Phase correction method based on uplink

A case in which a coherent joint transmission method for coherent combining of received signals at a UE is performed based on uplink is first described. That is, a method in which a phase correction for the coherent combining of received signals at the UE is performed based on uplink is first described.

(If uplink/downlink carrier phases are the same - Proposal 1)

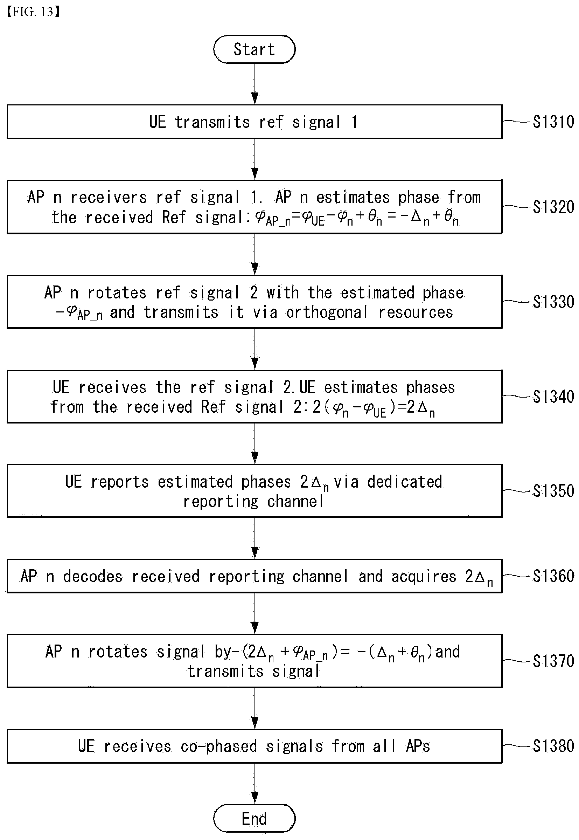

This proposal relates to a case in which an uplink carrier phase and a downlink carrier phase are the same in a UE and each AP performing coherent joint transmission. A coherent joint transmission method proposed in the present proposal is described in detail below with reference to FIGS. 13 to 17. In FIGS. 13 to 17, it is assumed that APs performing joint transmission are frequency and time synchronized, and the APs transmit the same signal on downlink.

FIG. 13 illustrates an example of performing a coherent joint transmission method described in the present disclosure.

S1310: A UE transmits a reference signal 1 (uplink reference signal). Here, a sequence and a resource for the UE to transmit the reference signal 1 may be allocated by a network (or a base station) to the UE. In addition, the sequence and the resource for the UE to transmit the reference signal 1 may be selected by the UE by observing a resource pool. The resource pool may be configured to the UE from the network (or the base station). The resource pool may be configured to the UE from the network (or the base station) via higher layer signaling. In this instance, the higher layer may be a radio resource control (RRC) layer.

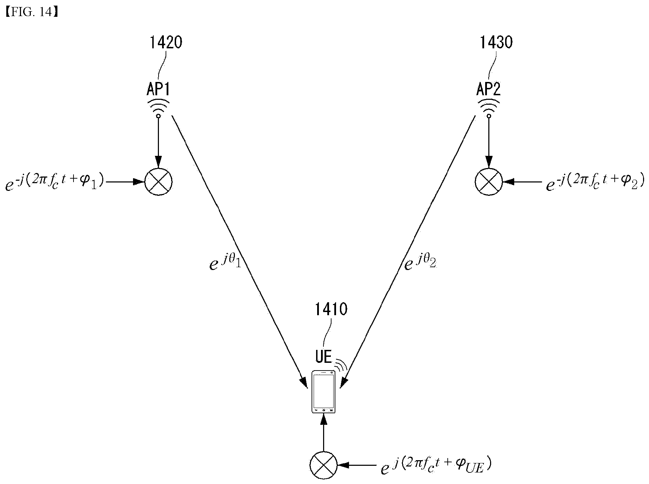

S1320: Then, each AP receives the reference signal 1 transmitted by the UE. FIG. 14 illustrates an example of an operation in which an AP estimates a phase of a received signal when performing a coherent joint transmission method described in the present disclosure. Referring to FIG. 14, carrier phases of AP1 1420 and AP2 1430 are respectively $\varphi1$ and $\varphi2$, phases of channels between the AP1 1420 and the AP2 1430 and a UE 1410 are respectively $\theta1$ and $\theta2$, and a carrier phase of the UE 1410 is $\varphi UE$. In this instance, the AP1 1420 and the AP2 1430 receive the reference signal 1 transmitted by the UE 1410 and estimate a phase of the received reference signal 1. Here, the received signal phase of the reference signal 1 estimated by the AP1 1420 and the AP2 1430 is obtained by subtracting the carrier phase of the AP from a sum of the carrier phase of the UE and the channel phase. That is, a value of the received signal phase of the AP is determined based on (i) the carrier phase of the UE, (ii) a phase of a transmission channel between the UE and the AP, and (iii) the carrier phase of the AP.

Referring again to FIG. 13, from a perspective of a specific AP (APn) among the APs performing the joint transmission, the APn estimates a phase of a received signal from the reference signal 1 received from the UE. The estimated phase includes a carrier phase of the UE, a phase of the transmission channel, and a carrier phase of the APn. In this case, the received signal phase (received signal phase value) estimated by the APn is the same as Equation below.

【Equation 3】

$$\phi AP\_n = \varphi UE - \varphi n + \theta n = -\Delta n + \theta n$$

Here, $\varphi UE$ denotes a carrier phase of the UE, $\theta n$ denotes a phase of a transmission channel between the UE and the APn, $\varphi n$ denotes a carrier phase of the APn, and $\Delta n$ denotes a value ($\varphi n - \varphi UE$) by subtracting the carrier phase of the UE from the carrier phase of the APn. In addition, n denotes that the AP is an nth AP among at least one AP performing the joint transmission, where n is a natural number.

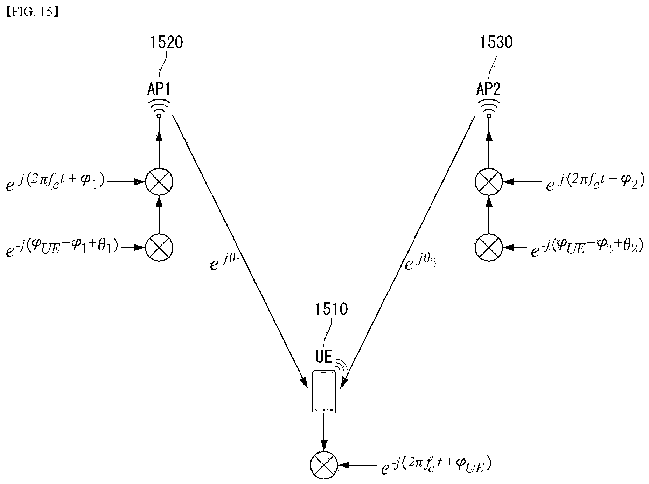

S1330: From a perspective of the specific AP (APn) among the APs performing the joint transmission, the APn rotates a phase of a reference signal 2 (downlink reference signal) by $-\varphi AP\_n$ using the phase value estimated in the step S1320 and transmits the reference signal 2 to the UE. In this instance, since the reference signal 2 transmitted by each AP is transmitted through resources orthogonal to each other, the UE can independently receive the reference signal 2 transmitted by each AP. FIG. 15 illustrates an example of an operation in which an AP transmits a reference signal when performing a coherent joint transmission method described in the present disclosure. Referring to FIG. 15, carrier phases of AP1 1520 and AP2 1530 are respectively $\varphi1$ and $\varphi2$, phases of channels between the AP1 1520 and the AP2 1530 and a UE 1510 are respectively $\theta1$ and $\theta2$, and a carrier phase of the UE 1510 is $\varphi UE$. In this instance, the AP1 1520 and the AP2 1530 rotate the reference signals 2 to be transmitted to the UE 1510 by ($\varphi UE-\varphi1+\theta1$) (1520) and ($\varphi UE-\varphi2+\theta2$) (1530), respectively, and then transmit the reference signals 2 to the UE 1510. In this case, phases of the reference signals 2 transmitted by the AP1 1520 and the AP2 1530 are [$\varphi1-(\varphi UE-\varphi1+\theta1) = 2\varphi1-\varphi UE-\theta1$] (1520) and [$\varphi2-(\varphi UE-\varphi2+\theta2) = 2\varphi2-\varphi UE-\theta2$] (1530), respectively.

Referring again to FIG. 13, the phase of the reference signal 2 transmitted by the APn is the same as Equation below.

【Equation 4】

$$\text{Phase value} = -\phi AP\_n + \varphi n = \Delta n - \theta n + \varphi n$$

Here, $\theta n$ denotes a phase of a transmission channel between the UE and the APn, $\varphi n$ denotes a carrier phase of the APn, and $\Delta n$ denotes a value ($\varphi n-\varphi UE$) by subtracting the carrier phase of the UE from the carrier phase of the APn. In addition, n denotes that the AP is an nth AP among at least one AP performing the joint transmission, where n is a natural number.

S1340: Then, the UE receives the reference signals 2 from the respective APs and estimates phases (received signal phases) of the received reference signals 2.

Referring again to FIG. 15, the reference signals 2 of the AP1 1520 and the AP2 1530 rotate by ($\varphi UE-\varphi1+\theta1$) (1520) and ($\varphi UE-\varphi2+\theta2$) (1530), respectively and pass the channel, and then are received by the UE 1510. Therefore, the received signal phases at the UE of the reference signals 2 transmitted by the AP1 1520 and the AP2 1530 are ($\varphi1-\varphi UE-\theta1+\theta1-\varphi UE = 2\varphi1-2\varphi UE$) (1520) and ($2\varphi2-\varphi UE-\theta2+\theta2-\varphi = 2\varphi-\varphi UE$) (1530), respectively.

From a perspective of the specific AP (APn) among the APs performing the joint transmission, the phase (received signal phase/received signal phase value) of the reference signal 2 from the APn estimated by the UE is the same as Equation below.

【Equation 5】

$$\texttt{Phase value} = \Delta n - \theta n + \varphi n + \theta n - \varphi UE = 2\Delta n$$

Here, $\theta n$ denotes a phase of a transmission channel between the UE and the APn, $\varphi n$ denotes a carrier phase of the APn, and $\Delta n$ denotes a value ($\varphi n - \varphi UE$) by subtracting the carrier phase of the UE from the carrier phase of the APn. In addition, n denotes that the AP is an nth AP among at least one AP performing the joint transmission, where n is a natural number.

S1350: Then, the UE reports each of phase values $2\Delta n$ estimated by the UE to the APn. The reporting operation of the UE may be understood as the UE transmitting to the AP information on the estimated received signal phase value based on the received signal phase estimation based on the reference signal 2 (downlink reference signal). In this instance, a resource used when the UE reports the estimated phase value $2\Delta n$ to the APn may be distinguished from a resource used for transmission of the reference signal 2 from the APn that the UE uses to estimate the received signal phase.

S1360: Then, the APn decodes the report of the phase value $2\Delta n$ received from the UE to obtain a phase difference $2\Delta n$.

S1370: Next, the AP_n obtains a phase correction value used for the coherent combining of the received signals at the UE based on the phase value obtained in the step S1320 and the phase difference obtained in the step S1360. In this instance, the phase correction value used for the coherent combining of the received signals at the UE is the same as Equation below.

[226]     【Equation 6】

$$\texttt{Phase value} = -(2\Delta n + \varphi AP\_n) = -(2\Delta n - \Delta n + \theta n) = -(\Delta n + \theta n)$$

Here, $\varphi APn$ denotes the phase value obtained in the step S1320, and $2\Delta n$ denotes the phase difference obtained in the step S1360. Further, $\theta n$ denotes a phase of a transmission channel between the UE and the APn, $\varphi n$ denotes a carrier phase of the APn, and $\Delta n$ denotes a value ($\varphi n - \varphi UE$) by subtracting the carrier phase of the UE from the carrier phase of the APn. In addition, n denotes that the AP is an nth AP among at least one AP performing the joint transmission, where n is a natural number.

Then, the APn corrects a phase of a transmission signal (downlink data) using the phase correction value and transmits it.

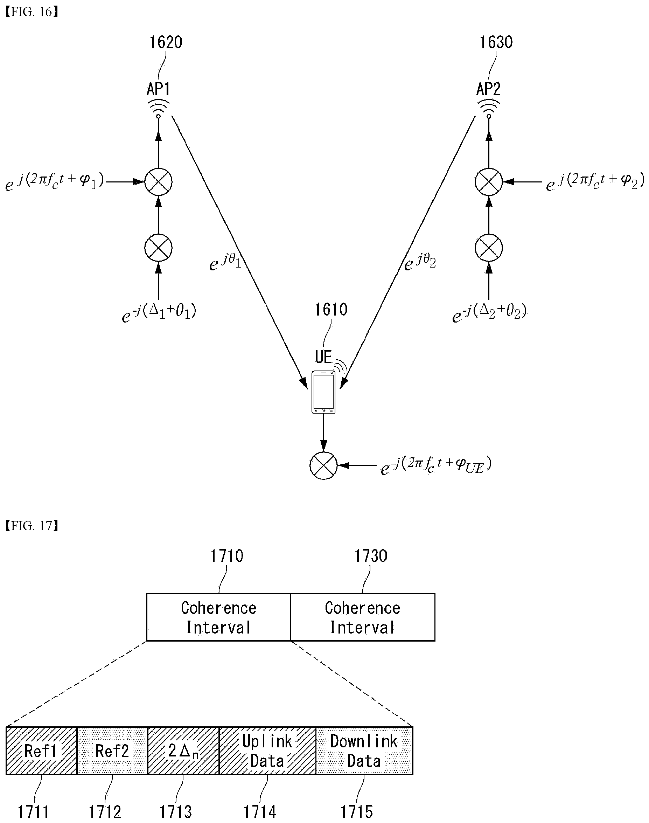

FIG. 16 illustrates an example of an operation in which an AP transmits downlink data when performing a coherent joint transmission method described in the present disclosure. Referring to FIG. 16, carrier phases of AP1 1620 and AP2 1630 are respectively $\varphi 1$ and $\varphi 2$, phases of channels between the AP1 1620 and the AP2 1630 and a UE 1610 are respectively $\theta 1$ and $\theta 2$, and a carrier phase of the UE 1610 is $\varphi UE$. In this instance, the AP1 1620 and the AP2 1630 respectively correct downlink data to be transmitted to the UE 1610 by $-(\Delta 1 + \theta 1)$ and $-(\Delta 2 + \theta 2)$ and transmit it. Therefore, phases of the downlink data respectively transmitted by the AP1 1620 and the AP2 1630 are [$\varphi 1 - (\Delta 1 + \theta 1)$] (1620) and [$\varphi 2 - (\Delta 2 + \theta 2)$] (1630).

S1380: Then, the UE receives the transmission signal (downlink data) from the respective APs. In this case, the phase of the transmitted signal from the APn received by the UE is the same as Equation below.

Phase value = $-(\Delta n + \theta n) + \varphi n + \theta n - \varphi UE = -\Delta n + \varphi n - \varphi UE = -\Delta n + \Delta n = 0$ 　　　　　[Equation 7]

Referring to Equation above, a phase of the received signal from the APn is zero, and thus the received signals from all the APs are coherent.

Referring again to FIG. 16, the phases of the downlink data respectively transmitted by the AP1 1620 and the AP2 1630 are [$\varphi 1 - (\Delta 1 + \theta 1)$] (1620) and [$\varphi 2 - (\Delta 2 + \theta 2)$] (1630). Since the channel phase between the AP and the UE is added to the phase of the downlink data and the carrier phase of the UE is subtracted, the received signal phase at the UE of the downlink data transmitted by the AP1 1620 is zero ([$\varphi 1 - (\Delta 1 + \theta 1) + \theta 1 - \varphi UE = \varphi 1 - \Delta 1 - \theta 1 + \theta 1 - \varphi UE = (\varphi 1 - \varphi UE) - \Delta 1 = \Delta 1 - \Delta 1 = 0$]), and the received signal phase at the UE of the downlink data transmitted by the AP2 1630 is zero ([$\varphi 2 - (\Delta 2 + \theta 2) + \theta 2 - \varphi UE = \varphi 2 - \Delta 2 - \theta 2 + \theta 2 - \varphi UE = (\varphi 2 - \varphi UE) - \Delta 2 = \Delta 2 - \Delta 2 = 0$]). Accordingly, the UE can receive signals transmitted from the APs having different carrier phases with the same phase, thereby enabling the coherent combining of the received signals.

FIG. 17 illustrates an example of a frame structure of a D-MIMO system according to a joint transmission method described in the present disclosure. Referring to FIG. 17, (1) transmission of a reference signal 1 from a UE to an AP (uplink) (1711), (2) transmission of a precoded reference signal 2 from the AP to the UE (downlink) (1712), (3) transmission of an estimated phase difference 2△n from the UE to the AP (uplink) (1713), and (4) transmission and reception operations of uplink and downlink data (1714 and 1715) must be performed within coherence intervals 1710 and 1730 which are a time interval during which a channel remains the same.

Since the reference signal 1 (uplink reference signal) is a signal transmitted by the UE to the AP, all the APs receive the same signal from the UE. On the other hand, since the reference signal 2 (downlink reference signal) is a signal transmitted by the AP to the UE and thus is precoded with specific phase information of different APs, the reference signal 2 is transmitted to the UE through independent resources for each AP.

In addition, since a phase difference 2△n between a carrier phase of the UE estimated by the UE and a carrier phase of the AP is information that is unique to each AP, the UE uses independent resources to report the phase difference 2△n to each AP. In this instance, the resources for the UE to transmit the phase difference 2△n to the AP may be implicitly designated based on the resources used by the APn to transmit the reference signal 2.

The reference signal 1 transmitted by the UE to the AP and the reference signal 2 transmitted by the AP to the UE may be signals assigned in a time domain.

If the reference signal 1 transmitted by the UE to the AP and the reference signal 2 transmitted by the AP to the UE are transmitted based on an orthogonal frequency division multiplexing (OFDM) scheme, the reference signal 1 and the reference signal 2 may be signals assigned in a frequency domain. In this case, when the UE estimates the 2△n based on the reference signal 2, the UE may estimate the 2△n for each subcarrier. The UE reports the estimated 2△n value for each subcarrier to the AP, and the AP may correct the phase for each subcarrier. The reference signals 2 respectively assigned to the subcarriers are grouped into subbands, and the UE estimates the phase difference 2△n for each subband within the grouped subbands and obtains an average value of the estimated phase differences 2△n. Afterwards, the UE may report the average value of the phase differences 2△n to the AP, and the AP may use the average value of the phase differences 2△n to correct the phase for each subband.

The UE may average the 2△n values estimated from the reference signals 2 assigned to each subcarrier for the entire band, and then may report the 2△n value obtained by averaging for the entire band to the AP. Based on the 2△n value obtained by averaging for the entire band, the AP may correct the phase for the entire band.

If the 2△n value is not a rapidly changing value but a very slowly changing value from a perspective of a 2△n value reporting cycle of the UE, the UE may not report the 2△n value every coherence interval. More specifically, if the 2△n value is not a rapidly changing value but a very slowly changing value, the UE may store and average values of a plurality of coherence intervals and then report an average value. That is, the 2△n value reporting cycle of the UE may be a specific number of (two or more) coherence intervals not each coherence interval. For example, if the 2△n value is not a rapidly changing value but a very slowly changing value, the 2△n value reporting cycle of the UE may be three coherence intervals. In addition, a network (base station/AP) may configure the 2△n value reporting cycle of the UE to the UE based on a channel situation. The operation for the network (base station/AP) to configure the 2△n value reporting cycle of the UE to the UE may be performed by receiving by the network a channel state report from the UE and based on the channel state report received from the UE.

One of the causes generating a phase correction value is a group delay of a transmission and reception system. The group delay is a phenomenon in which a phase delay occurs differently for each frequency in a linear time invariant system. In general, a phase change θ(f) due to a component delay is in the form of a linear function of frequency, and a group delay Tg is defined as a differential value of the phase delay θ(f), expressed as a function of frequency, with respect to frequency.

【Equation 8】

$$T_g = -\frac{1}{2\pi}\frac{d\theta(f)}{df}$$

If the phase correction value of the AP is due to the group delay, the UE may obtain a slope value of the phase for each frequency based on the group delay definition not the correction value for each frequency and may report it to the AP.

If the 2△n value is not a rapidly changing value, the UE may not report the 2△n value every coherence interval, but may report the 2△n value only when specific conditions for reporting the 2△n value occur. For example, as the UE moves, a specific AP among the APs, that has constituted a cluster transmitting data to the UE, may be excluded from the cluster, and a new AP may be included in the cluster. Only if there is a change in the construction of the APs constituting the cluster as above, the UE may estimate the phase correction value and report it to the APs. If there is a change in the construction of the APs constituting the cluster, the network may indicate the UE to estimate the phase correction value and report it via a control channel.

In addition, not all UEs receiving services from the APs, but only a specific UE among all the UEs may estimate the phase correction values and report them to the APs. In this instance, the UE, that estimates the phase correction values and reports them, among all the UEs receiving services from the APs may be determined based on a UE capability or a UE state.

Further, only a specific AP not all the APs providing services to the UE may receive the phase correction values estimated and reported by the UE. For example, if there is a specific AP that performs control for the UE on behalf of other APs among the APs providing services to the UE, only the specific AP may receive the phase correction values from the UE. In this case, the phase correction values received by the specific AP may be shared to the other APs through a fronthaul connection.

The joint transmission method when the uplink carrier phase and the downlink carrier phase are the same in the UE and each AP has been described.

However, the uplink carrier phase and the downlink carrier phase may be different from each other in the UE and each AP depending on configuration of a receiver hardware. Even in this case, the method described above can be applied in the same way, thereby enabling phase synchronization between the APs. The following describes a joint transmission method through the phase synchronization between the APs when the uplink carrier phase and the downlink carrier phase are different from each other in the UE and each AP.

(If uplink/downlink carrier phases are different - Proposal 2)

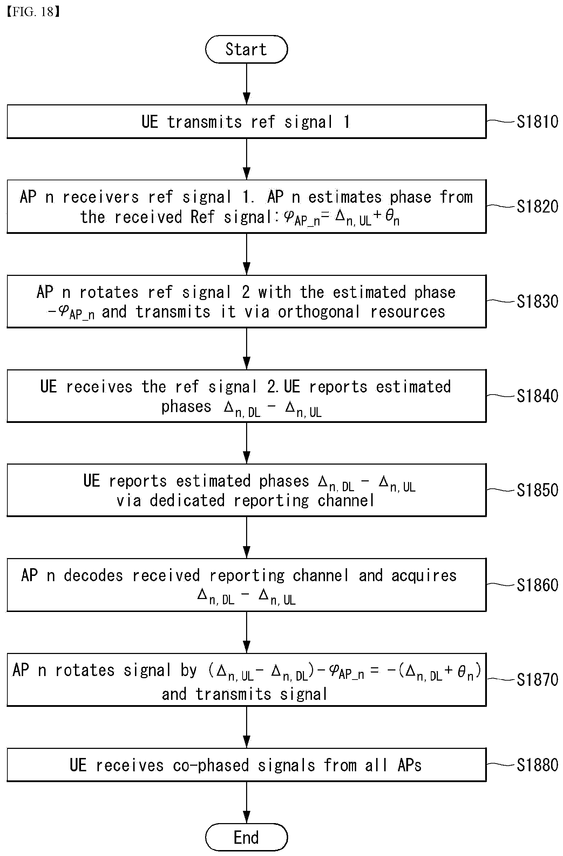

This proposal relates to a case in which an uplink carrier phase and a downlink carrier phase are different from each other in a UE and each AP performing coherent joint transmission. That is, the present proposal relates to a case in which an uplink carrier phase and a downlink carrier phase of the UE are different from each other, and an uplink carrier phase and a downlink carrier phase of the respective APs are different from each other. A coherent joint transmission method proposed in the present proposal is described in detail below with reference to FIGS. 18 to 22. In FIGS. 18 to 22, it is assumed that APs performing joint transmission are frequency and time synchronized, and the APs transmit the same signal on downlink.

FIG. 18 illustrates another example of performing a coherent joint transmission method described in the present disclosure.

S1810: A UE transmits a reference signal 1 (uplink reference signal). Here, a sequence and a resource for the UE to transmit the reference signal 1 may be allocated by a network (or a base station) to the UE. In addition, the sequence and the resource for the UE to transmit the reference signal 1 may be selected by the UE by observing a resource pool. The resource pool may be configured to the UE from the network (or the base station). The resource pool may be configured to the UE from the network (or the base station) via higher layer signaling. In this instance, the higher layer may be a radio resource control (RRC) layer.

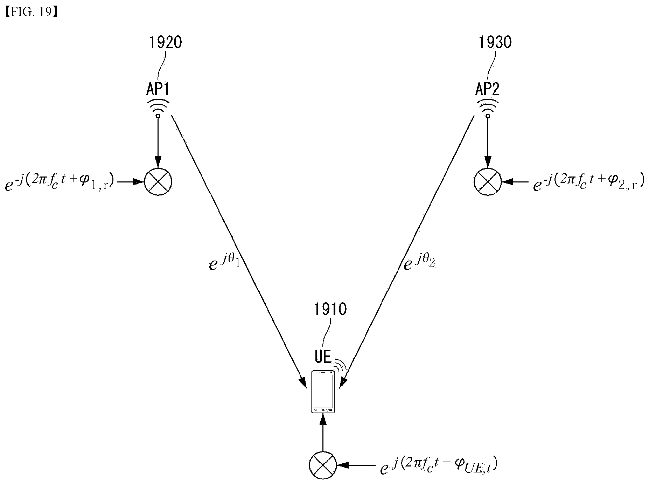

S1820: Then, each AP receives the reference signal 1 transmitted by the UE. FIG. 19 illustrates an example of an operation in which an AP estimates a phase of a received signal when performing a coherent joint transmission method described in the present disclosure. Referring to FIG. 19, uplink carrier phases of AP1 1920 and AP2 1930 are respectively $\varphi1,r$ and $\varphi2,r$, phases of channels between the AP1 1920 and the AP2 1930 and a UE 1910 are respectively $\theta1$ and $\theta2$, and an uplink carrier phase of the UE 1910 is $\varphi UE,t$. In this instance, the AP1 1920 and the AP2 1930 receive the reference signal 1 transmitted by the UE 1910 and estimate a phase of the received reference signal 1. Here, the received signal phase of the reference signal 1 estimated by the AP1 1920 and the AP2 1930 is obtained by subtracting the carrier phase of the AP from a sum of the carrier phase of the UE and the channel phase. That is, a value of the received signal phase of the AP is determined based on (i) the uplink carrier phase of the UE, (ii) a phase of a transmission channel between the UE and the AP, and (iii) the uplink carrier phase of the AP.

Referring again to FIG. 18, from a perspective of a specific AP (APn) among the APs performing the joint transmission, the APn estimates a phase of a received signal from the reference signal 1 received from the UE. The estimated phase includes a carrier phase of the UE, a phase of the transmission channel, and a carrier phase of the APn. In this case, the received signal phase (received signal phase value) estimated by the APn is the same as Equation below.

【Equation 9】

$$\phi AP\_n = \varphi UE,t - \varphi n,r + \theta n = \Delta n,UL + \theta n \quad (\Delta n,UL = \varphi UE,t - \varphi n,r)$$

Here, $\varphi UE,t$ denotes an uplink carrier phase of the UE, $\theta n$ denotes a phase of a transmission channel between the UE and the APn, $\varphi n,r$ denotes an uplink carrier phase of the APn, and $\Delta n,UL$ denotes a value ($\varphi UE,t - \varphi n,r$) by subtracting the uplink carrier phase of the APn from the uplink carrier phase of the UE. In addition, n denotes that the AP is an nth AP among at least one AP performing the joint transmission, where n is a natural number.

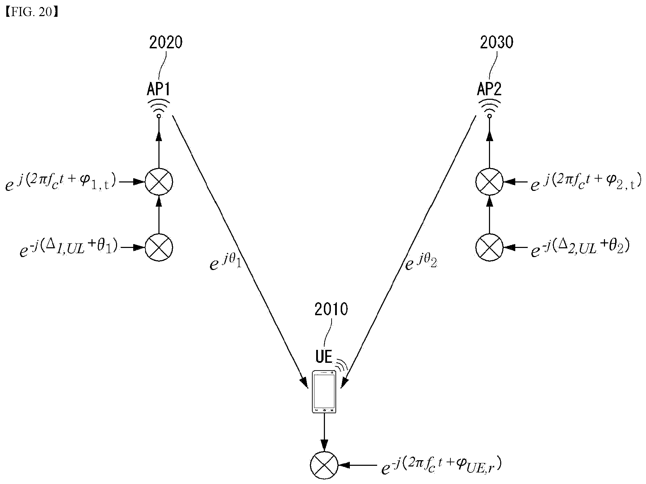

S1830: From a perspective of the specific AP (APn) among the APs performing the joint transmission, the APn rotates a phase of a reference signal 2 (downlink reference signal) by $-\varphi AP\_n$ using the phase value estimated in the step S1820 and transmits the reference signal 2 to the UE. In this instance, since the reference signal 2 transmitted by each AP is transmitted through resources orthogonal to each other, the UE can independently receive the reference signal 2 transmitted by each AP. FIG. 20 illustrates an example of an operation in which an AP transmits a reference signal when performing a coherent joint transmission method described in the present disclosure. Referring to FIG. 20, downlink carrier phases of AP1 2020 and AP2 2030 are respectively $\varphi 1,t$ and $\varphi 2,t$, phases of channels between the AP1 2020 and the AP2 2030 and a UE 2010 are respectively $\theta 1$ and $\theta 2$, and a downlink carrier phase of the UE 2010 is $\varphi UE,r$. In this instance, the AP1 2020 and the AP2 2030 rotate the reference signals 2 to be transmitted to the UE 2010 by ($\varphi UE,t - \varphi 1,r + \theta 1$) (2020) and ($\varphi UE,t - \varphi 2,r + \theta 2$) (2030), respectively, and then transmit the reference signals 2 to the UE 2010. In this case, phases of the reference signals 2 transmitted by the AP1 2020 and the AP2 2030 are [$\varphi 1,t - (\varphi UE,t - \varphi 1,r + \theta 1) = \varphi 1,t + \varphi 1,r - \varphi UE,t - \theta 1$] (2020) and [$\varphi 2 - (\varphi UE,t - \varphi 2,r + \theta 2) = \varphi 2,t + \varphi 2,r - \varphi UE,t - \theta 2$](2030), respectively.

Referring again to FIG. 18, the phase of the reference signal 2 transmitted by the APn is the same as Equation below.

【Equation 10】

$$\text{Phase value} = -\phi AP\_n + \varphi n,t = -(\Delta n,UL + \theta n) + \varphi n,t$$

Here, $\theta n$ denotes a phase of a transmission channel between the UE and the APn, $\varphi n,t$ denotes a downlink carrier phase of the APn, and $\Delta n,UL$ denotes a value ($\varphi UE,t - \varphi n,r$) by subtracting the uplink carrier phase of the APn from the uplink carrier phase of the UE. In addition, n denotes that the AP is an nth AP among at least one AP performing the joint transmission, where n is a natural number.

S1840: Then, the UE receives the reference signals 2 from the respective APs and estimates phases (received signal phases) of the received reference signals 2.

Referring again to FIG. 20, the reference signals 2 of the AP1 2020 and the AP2 2030 rotate by ($\varphi UE,t - \varphi 1,r + \theta 1$) (2020) and ($\varphi UE,t - \varphi 2,r + \theta 2$) (2030), respectively and pass the channel, and then are received by the UE 2010. Therefore, the received signal phases at the UE of the reference signals 2 transmitted by the AP1 2020 and the AP2 2030 are [$\varphi 1,t + \varphi 1,r - \varphi UE,t - \theta 1 + \theta 1 - \varphi UE,r = (\varphi 1,r - \varphi UE,t) + (\varphi 1,t - \varphi UE,r)$] (2020) and [$\varphi 2,t + \varphi 2,r - \varphi UE,t - \theta 2 + \theta 2 - \varphi UE,r = (\varphi 2,r - \varphi UE,t) + (\varphi 2,t - \varphi UE,r)$] (2030), respectively.

From a perspective of the specific AP (APn) among the APs performing the joint transmission, the phase (received signal phase/received signal phase value) of the reference signal 2 from the APn estimated by the UE is the same as Equation below.

$$\text{Phase value} = -(\Delta n,UL + \theta n) + \varphi n, t + \theta n - \varphi UE,r = \Delta n, DL - \Delta n, UL \ (\Delta n,DL = \varphi n, t - \varphi UE, r) \qquad \text{[Equation 11]}$$

Here, $\theta n$ denotes a phase of a transmission channel between the UE and the APn, $\varphi n,t$ denotes a downlink carrier phase of the APn, $\Delta n,UL$ denotes a value ($\varphi UE,t - \varphi n,r$) by subtracting the uplink carrier phase of the APn from the uplink carrier phase of the UE, and $\Delta n,DL$ denotes a value ($\varphi n,t - \varphi UE,r$) by subtracting the downlink carrier phase of the UE from the downlink carrier phase of the APn. In addition, n denotes that the AP is an nth AP among at least one AP performing the joint transmission, where n is a natural number.

S1850: Then, the UE reports each of phase values ($\Delta n,DL - \Delta n,UL$) estimated by the UE to the APn. The reporting operation of the UE may be understood as the UE transmitting to the AP information on the estimated received signal phase value based on the received signal phase estimation based on the reference signal 2 (downlink reference signal). In this instance, a resource used when the UE reports the estimated phase value ($\Delta n,DL - \Delta n,UL$) to the APn may be distinguished from a resource used for transmission of the reference signal 2 from the APn that the UE uses to estimate the received signal phase.

S1860: Then, the APn decodes the report of the phase value ($\Delta n,DL - \Delta n,UL$) received from the UE to obtain a phase difference ($\Delta n,DL - \Delta n,UL$).

S1870: Next, the APn obtains a phase correction value used for the coherent combining of the received signals at the UE based on the phase value obtained in the step S1820 and the phase difference obtained in the step S1860. In this instance, the phase correction value used for the coherent combining of the received signals at the UE is the same as Equation below.

$$\text{Phase value} = -(\Delta n,DL - \Delta n,UL + \phi AP\_n) = -(\Delta n,DL - \Delta n,UL + \Delta n,UL + \theta n) = -(\Delta n,DL + \theta n) \qquad \text{[Equation 12]}$$

Here, $\varphi AP\_n$ denotes the phase value obtained in the step S1820, and ($\Delta n,DL - \Delta n,UL$) denotes the phase difference obtained in the step S1860. Further, $\theta n$ denotes a phase of a transmission channel between the UE and the APn. Further, $\Delta n,UL$ denotes a value ($\varphi UE,t - \varphi n,r$) by subtracting the uplink carrier phase of the APn from the uplink carrier phase of the UE, and $\Delta$n,DL denotes a value ($\varphi$n,t - $\varphi$UE,r) by subtracting the downlink carrier phase of the UE from the downlink carrier phase of the APn.

Then, the APn corrects a phase of a transmission signal (downlink data) using the phase correction value and transmits it.

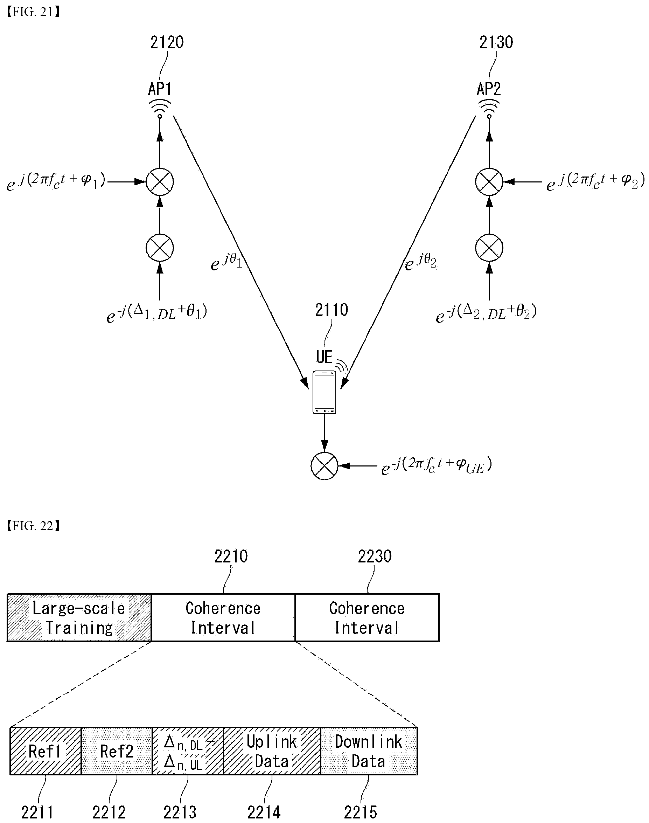

FIG. 21 illustrates an example of an operation in which an AP transmits downlink data when performing a coherent joint transmission method described in the present disclosure. Referring to FIG. 21, downlink carrier phases of AP1 2120 and AP2 2130 are respectively $\varphi$1,t and $\varphi$2,t, phases of channels between the AP1 2120 and the AP2 2130 and a UE 2110 are respectively $\theta$1 and $\theta$2, and a downlink carrier phase of the UE 2110 is $\varphi$UE,r. In this instance, the AP1 2120 and the AP2 2130 respectively correct downlink data to be transmitted to the UE 2110 by -($\Delta$1,DL+$\theta$1) and -($\Delta$2.DL+$\theta$2) and transmit it. Therefore, phases of the downlink data respectively transmitted by the AP1 2120 and the AP2 2130 are [$\varphi$1,t -( $\Delta$ ,DL+$\theta$1)] (2120) and [$\varphi$2,t - ($\Delta$2,DL+ $\theta$2)] (2130).

S1880: Then, the UE receives the transmission signal (downlink data) from the respective APs. In this case, the phase of the transmitted signal from the APn received by the UE is the same as Equation below.

**Phase value** = - ($\Delta$n,DL+ $\theta$n) + $\varphi$n,t + $\theta$n - $\varphi$UE,r = - $\Delta$n,DL + $\varphi$n,t - $\varphi$UE,r = -$\Delta$n,DL + $\Delta$n,DL = 0      [Equation 13]

Referring to Equation above, a phase of the received signal from the APn is zero, and thus the received signals from all the APs are coherent.

Referring again to FIG. 21, the phases of the downlink data respectively transmitted by the AP1 2120 and the AP2 2130 are [$\varphi$1,t - ($\Delta$1,DL+$\theta$1)] (2120) and [$\varphi$2,t - ($\Delta$2,DL+$\theta$2)] (2130). Since the channel phase between the AP and the UE is added to the phase of the downlink data and the downlink carrier phase of the UE is subtracted, the received signal phase at the UE of the downlink data transmitted by the AP1 2120 is zero ([$\varphi$1,t - ( $\Delta$1,DL+ $\theta$1) + $\theta$1 - $\varphi$UE,r = $\varphi$1,t - $\Delta$1,DL - $\theta$1 + $\theta$1 - $\varphi$UE,r = ($\varphi$1,t - $\varphi$UE,r) - $\Delta$1,DL = $\Delta$1,DL - $\Delta$1,DL = 0]), and the received signal phase at the UE of the downlink data transmitted by the AP2 2130 is zero ([$\varphi$2,t - ( $\Delta$2,DL+ $\theta$2) + $\theta$2 - $\varphi$UE,r = $\varphi$2,t - $\Delta$2,DL - $\theta$2 + $\theta$2 - $\varphi$UE,r = ($\varphi$2,t - $\varphi$UE,r) - $\Delta$2,DL = $\Delta$2,DL - $\Delta$2,DL = 0]). Accordingly, the UE can receive signals transmitted from the APs having different carrier phases with the same phase, thereby enabling the coherent combining of the received signals.

FIG. 22 illustrates another example of a frame structure of a D-MIMO system according to a joint transmission method described in the present disclosure. Referring to FIG. 22, (1) transmission of a reference signal 1 from a UE to an AP (uplink) (2211), (2) transmission of a precoded reference signal 2 from the AP to the UE (downlink) (2212), (3) transmission of an estimated phase difference ($\Delta$n,DL - $\Delta$n,UL) from the UE to the AP (uplink) (2213), and (4) transmission and reception operations of uplink and downlink data (2214 and 2215) must be performed within coherence intervals 2210 and 2230 which are a time interval during which a channel remains the same.

Since the reference signal 1 (uplink reference signal) is a signal transmitted by the UE to the AP, all the APs receive the same signal from the UE. On the other hand, since the reference signal 2 (downlink reference signal) is a signal transmitted by the AP to the UE and thus is precoded with specific phase information of different APs, the reference signal 2 is transmitted to the UE through independent resources for each AP.

In addition, since a phase difference ($\Delta$n,DL - $\Delta$n,UL) estimated by the UE is information that is unique to each AP, the UE uses independent resources to report the phase difference ($\Delta$n,DL - $\Delta$n,UL) to each AP. In this instance, the resources for the UE to transmit the phase difference ($\Delta$n,DL - $\Delta$n,UL) to the AP may be implicitly designated based on the resources used by the APn to transmit the reference signal 2.

The coherent joint transmission method for the coherent combining of received signals at the UE described in the present disclosure may also be performed based on downlink. The following describes a case in which a coherent joint transmission method for the coherent combining of received signals at the UE is performed based on downlink.

Downlink based phase correction method

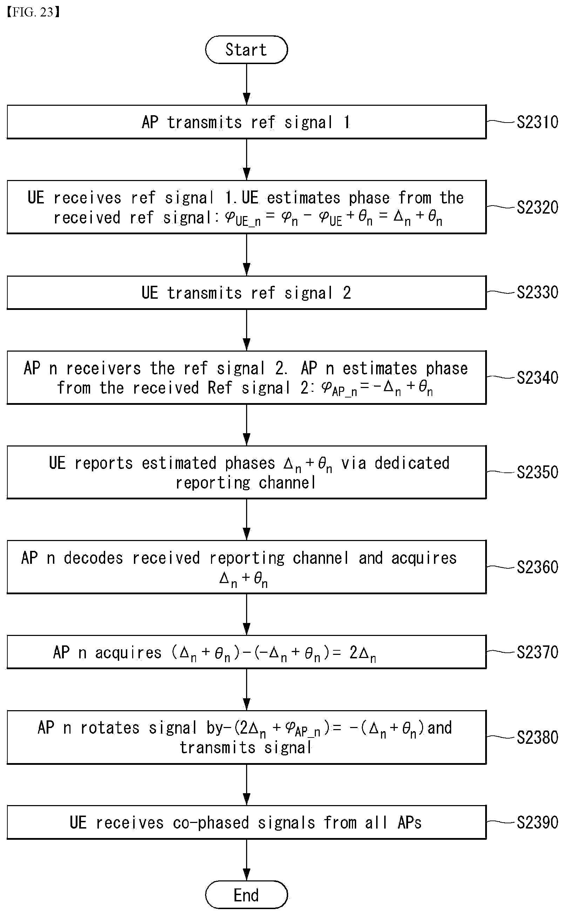

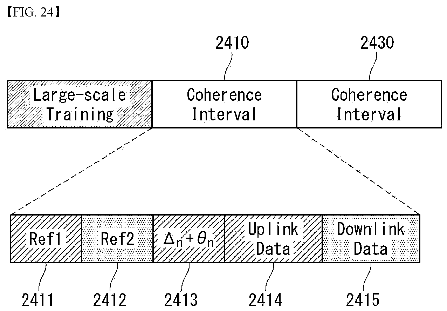

In the present method, it is assumed that an uplink carrier phase and a downlink carrier phase are the same in a UE and each AP performing coherent joint transmission. A coherent joint transmission method proposed in the present proposal is described in detail below with reference to FIGS. 23 and 24. In FIGS. 23 and 24, it is assumed that APs performing joint transmission are frequency and time synchronized, and the APs transmit the same signal on downlink.

FIG. 23 illustrates an example of performing a coherent joint transmission method described in the present disclosure.

S2310: Each of APs transmits a reference signal 1 (downlink reference signal) to a UE. In this instance, the reference signals 1 transmitted by each AP are transmitted through different independent resources.

S2320: Next, the UE receives the reference signal 1 from each AP and estimates a phase of the received signal. The estimated phase includes a carrier phase of the UE, a phase of a transmission channel, and a carrier phase of an APn.

In this instance, the received signal phase (received signal phase value) estimated based on the reference signal 1 received by the UE from the APn is the same as Equation below.

【Equation 14】

$$\phi UE\_n= \varphi n - \varphi UE + \Theta n = \Delta n + \Theta n \quad (\Delta n = \varphi n - \varphi UE)$$

Here, $\varphi UE$ denotes a carrier phase of the UE, $\theta n$ denotes a phase of a transmission channel between the UE and the APn, $\varphi n$ denotes a carrier phase of the APn, and $\Delta n$ denotes a value ($\varphi n$- $\varphi UE$) by subtracting the carrier phase of the UE from the carrier phase of the APn. In addition, n denotes that the AP is an nth AP among at least one AP performing the joint transmission, where n is a natural number.

S2330: Then, the UE transmits a reference signal 2 (uplink reference signal) to each of the APs.

S2340: Then, each of the APs receives the reference signal 2 from the UE and estimates a received signal phase of the reference signal 2 based on the reference signal 2. The phase of the reference signal 2 estimated by the APn is the same as Equation below.

【Equation 15】

$$\textbf{Phase value} = \varphi UE + \Theta n - \varphi n = -\Delta n + \Theta n$$

Here, $\varphi UE$ denotes a carrier phase of the UE, $\theta n$ denotes a phase of a transmission channel between the UE and the APn, $\varphi n$ denotes a carrier phase of the APn, and $\Delta n$ denotes a value ($\varphi n$- $\varphi UE$) by subtracting the carrier phase of the UE from the carrier phase of the APn. In addition, n denotes that the AP is an nth AP among at least one AP performing the joint transmission, where n is a natural number.

S2350: Then, the UE reports a phase value ($\Delta n + \theta n$) estimated in the step S2320 to the APn. In the instance, a resource used by the UE to report the estimated phase value ($\Delta n + \theta n$) to the APn may be distinguished from a resource used to transmit the reference signal 1 from the APn.

S2360: The APn decodes the report of the phase value ($\Delta n + \theta n$) received from the UE to obtain a phase value ($\Delta n + \theta n$).

S2370: The APn corrects a phase value of a transmission signal using the phase value obtained in the step S2340 and the phase value obtained in the step S2360. In this instance, a phase correction value for correcting the phase value of the transmission signal is the same as Equation below.

Phase value = $\phi UE\_n$ - (-$\Delta n + \theta n$) = $\Delta n + \theta n$ - (-$\Delta n + \theta n$) = $2\Delta n$     [Equation 16]

S2380: Next, each APn corrects the phase of the transmission signal using the phase correction value and transmits it to the UE.

S2390: Then, the UE receives coherent signals from the APs. In this instance, the phase of the signal received by the UE from each APn is the same as Equation below.

【Equation 17】

$$\textbf{Phase value} = -(\Delta n + \Theta n) + \varphi n + \Theta n - \varphi UE = - \Delta n + \Delta n = 0$$

Referring to Equation above, a phase of the received signal from the APn is zero, and thus the received signals from all the APs are coherent.

FIG. 24 illustrates another example of a frame structure of a D-MIMO system according to a joint transmission method described in the present disclosure. Referring to FIG. 24, (1) transmission of a reference signal 1 from an AP to a UE (downlink) (2411), (2) transmission of a reference signal 2 from the UE to the AP (uplink) (2412), (3) transmission of an estimated phase value ($\Delta n + \theta n$) from the UE to the AP (uplink) (2413), and (4) transmission and reception operations of uplink and downlink data (2414 and 2415) must be performed within coherence intervals 2410 and 2430 which are a time interval during which a channel remains the same.

Since the reference signal 1 is a reference signal transmitted by the AP to the UE, each AP transmits the reference signal 1 to the UE using independent resources. Since the reference signal 2 is a signal transmitted by the UE to the APs, all the APs receive the same signal from the UE.

Since the phase value ($\Delta n + \theta n$) is information that is unique to each AP, the UE uses independent resources to report the phase value ($\Delta n,DL$ - $\Delta n,UL$) to each AP. In this instance, the resources used to transmit the phase value ($\Delta n + \theta n$) may be implicitly designated by the resources used by the APn to transmit the reference signal 1.

In addition, the phase correction method based on the downlink can be applied in the same way even when the uplink carrier phase and the downlink carrier phase are different from each other in the UE and each AP depending on configuration of a receiver hardware, thereby enabling phase synchronization between the APs.

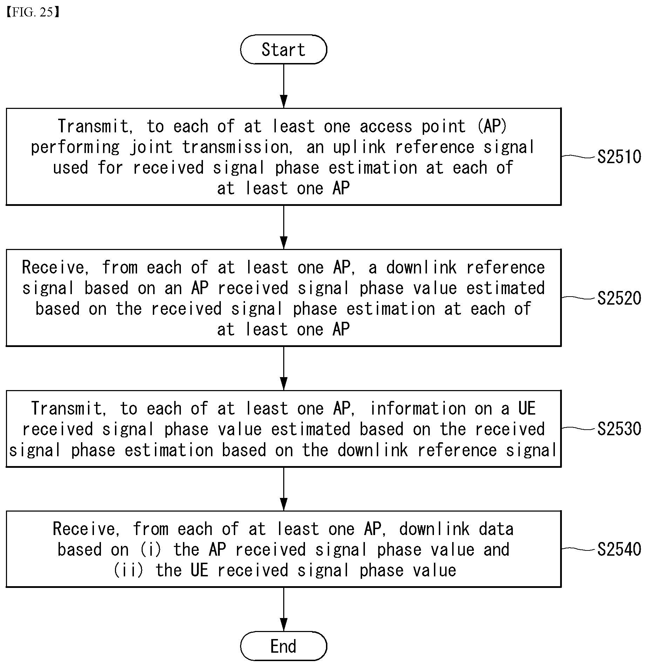

FIG. 25 is a flowchart illustrating an example in which a user equipment (UE) performs a method of performing a joint transmission described in the present disclosure.

First, the UE transmits, to each of at least one access point (AP) performing a joint transmission, an uplink reference signal used for a received signal phase estimation at each of the at least one AP, in S2510.

Next, the UE receives, from each of the at least one AP, a downlink reference signal based on an AP received signal phase value estimated based on the received signal phase estimation at each of the at least one AP, in S2520.

Then, the UE transmits, to each of the at least one AP, information on a UE received signal phase value estimated based on the received signal phase estimation based on the downlink reference signal, in S2530.

Finally, the UE receives, from each of the at least one AP, downlink data based on (i) the AP received signal phase value and (ii) the UE received signal phase value, in S2540.

The UE includes a transmitter configured to transmit a radio signal, a receiver configured to receive the radio signal, at least one processor, and at least one computer memory operably connectable to the at least one processor and configured to store instructions performing operations based on being executed by the at least one processor. In this instance, the operations comprise the steps described with reference to FIG. 25.

The operations described with reference to FIG. 25 may be stored in a non-transitory computer readable medium (CRM) storing one or more instructions. The non-transitory computer readable medium stores one or more instructions executable by one or more processors and allows the one or more instructions to perform the operations described with reference to FIG. 25.

In a device including one or more memories and one or more processors operably connected to the one or more memories, the one or more processors control the device to perform the operations described with reference to FIG. 25.

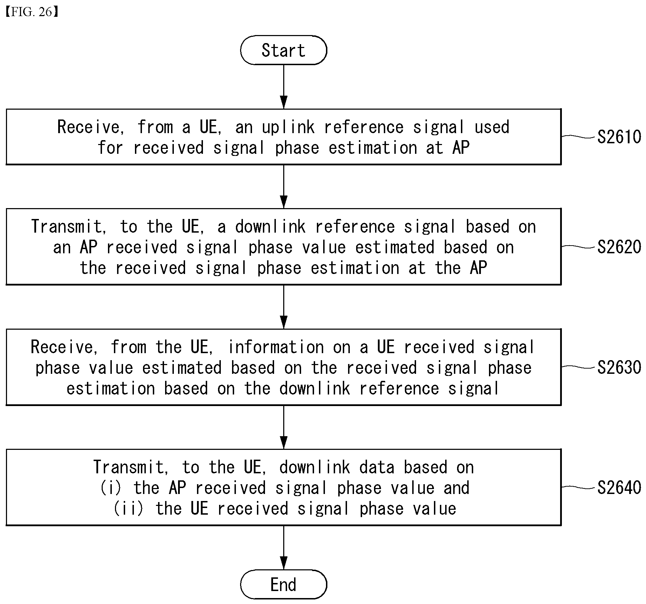

FIG. 26 is a flowchart illustrating an example in which an access point (AP) performs a method of performing a joint transmission described in the present disclosure.

First, the AP receives, from a UE, an uplink reference signal used for a received signal phase estimation at the AP, in S2610.

Next, the AP transmits, to the UE, a downlink reference signal based on an AP received signal phase value estimated based on the received signal phase estimation at the AP, in S2620.

Then, the AP receives, from the UE, information on a UE received signal phase value estimated based on the received signal phase estimation based on the downlink reference signal, in S2630.

Finally, the AP transmits, to the UE, downlink data based on (i) the AP received signal phase value and (ii) the UE received signal phase value, in S2640.

The AP includes a transmitter configured to transmit a radio signal, a receiver configured to receive the radio signal, at least one processor, and at least one computer memory operably connectable to the at least one processor and configured to store instructions performing operations based on being executed by the at least one processor. In this instance, the operations comprise the steps described with reference to FIG. 26.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Availability]

The present disclosure has been described focusing on examples applying to 3GPP LTE/LTE-A and the 5G system, but can be applied to various wireless communication systems in addition to 3GPP LTE/LTE-A and the 5G system.

**Claims**

1. A method of receiving, by a user equipment (UE), downlink data in a wireless communication system, the method comprising:

   transmitting, to each of at least one access point (AP) performing a joint transmission, an uplink reference signal used for a received signal phase estimation at each of the at least one AP;
   receiving, from each of the at least one AP, a downlink reference signal based on an AP received signal phase value estimated based on the received signal phase estimation at each of the at least one AP,
   transmitting, to each of the at least one AP, information on a UE received signal phase value estimated based on the received signal phase estimation based on the downlink reference signal; and
   receiving, from each of the at least one AP, the downlink data based on (i) the AP received signal phase value and (ii) the UE received signal phase value.

2. The method of claim 1, wherein the downlink reference signal is transmitted by applying the AP received signal phase value.

3. The method of claim 2, wherein a phase value of the downlink reference signal applying the AP received signal phase value is a phase value by rotating a phase value of the downlink reference signal before applying the AP received signal phase value by the AP received signal phase value.

4. The method of claim 3, wherein the AP received signal phase value is determined based on (i) a carrier phase of the UE, (ii) a phase of a transmission channel between the UE and the AP, and (iii) a carrier phase of the AP.

5. The method of claim 4, wherein an uplink carrier phase and a downlink carrier phase of the UE are the same, and wherein an uplink carrier phase and a downlink carrier phase of the AP are the same.

6. The method of claim 5, wherein the AP received signal phase value is determined by an equation below:

   [Equation]

   $$\phi AP\ n = \varphi UE - \varphi n + \theta n = -\Delta n + \theta n$$

   where $\varphi UE$ denotes a carrier phase of the UE,
   $\theta n$ denotes a phase of a transmission channel between the UE and the AP,
   $\varphi n$ denotes a carrier phase of the AP,
   $\Delta n$ denotes a value by subtracting the carrier phase of the UE from the carrier phase of the AP, and
   'n' denotes that the AP is an nth AP among the at least one AP performing the joint transmission, where 'n' is a natural number.

7. The method of claim 6, wherein

   [Equation]

   $$\mathbf{Phase\ value} = -\phi AP\_n + \varphi n = \Delta n - \theta n + \varphi n$$

   the phase value of the downlink reference signal applying the AP received signal phase value is determined by an equation above.

8. The method of claim 7, wherein the UE received signal phase value is determined by an equation below:

[Equation]

$$\texttt{Phase value} = \Delta n - \theta n + \varphi n + \theta n - \varphi UE = 2\Delta n$$

wherein the information on the UE received signal phase value includes $2\Delta n$.

9. The method of claim 8, wherein a phase correction value for a phase correction of the downlink data is determined by an equation below based on (i) the AP received signal phase value and (ii) the UE received signal phase value:

[Equation]

$$\texttt{Phase value} = -(2\Delta n + \phi AP\_n) = -(2\Delta n - \Delta n + \theta n) = -(\Delta n + \theta n)$$

wherein a reception phase at the UE of the downlink data that is transmitted with a corrected phase based on the phase correction value is zero.

10. The method of claim 4, wherein an uplink carrier phase and a downlink carrier phase of the UE are different from each other, and
wherein an uplink carrier phase and a downlink carrier phase of the AP are different from each other.

11. The method of claim 10, wherein the AP received signal phase value is determined by an equation below:

[Equation]

$$\phi AP\_n = \varphi UE, t - \varphi n, r + \theta n = \Delta n, UL + \theta n \; (\Delta n, UL = \varphi UE, t - \varphi n, r)$$

where $\varphi UE, t$ denotes an uplink carrier phase of the UE,
$\theta n$ denotes a phase of a transmission channel between the UE and the AP,
$\varphi n, r$ denotes an uplink carrier phase of the AP,
$\Delta n, UL$ denotes a value by subtracting the uplink carrier phase of the AP from the uplink carrier phase of the UE, and
'n' denotes that the AP is an nth AP among the at least one AP performing the joint transmission, where 'n' is a natural number.

12. The method of claim 11, wherein

[Equation]

$$\texttt{Phase value} = -\phi AP\_n + \varphi n, t = -(\Delta n, UL + \theta n) + \varphi n, t$$

the phase value of the downlink reference signal applying the AP received signal phase value is determined by an equation above.

13. The method of claim 12, wherein the UE received signal phase value is determined by an equation below:

$\texttt{Phase value} = -(\Delta n, UL + \theta n) + \varphi n, t + \theta n - \varphi UE, r = \Delta n, DL - \Delta n, UL \; (\Delta n, DL = \varphi n, t - \varphi UE, r)$ [Equation]

where $\varphi UE, r$ denotes a downlink carrier phase of the UE,
$\varphi n, t$ denotes a downlink carrier phase of the AP, and
$\Delta n, DL$ denotes a value by subtracting the downlink carrier phase of the UE from the downlink carrier phase of the AP,
wherein the information on the UE received signal phase value includes $\Delta n, DL - \Delta n, UL$.

14. The method of claim 13, wherein a phase correction value for a phase correction of the downlink data is determined by an equation below based on (i) the AP received signal phase value and (ii) the UE received signal phase value.

$$\textbf{Phase value} = -(\Delta n,DL - \Delta n,UL + \phi AP\_n) = -(\Delta n,DL - \Delta n,UL + \Delta n, UL + \theta n) = -(\Delta n,DL + \theta n) \qquad \text{[Equation]}$$

15. The method of claim 1, wherein a resource for the UE to transmit the information on the UE received signal phase value to one AP of the at least one AP is determined based on a resource for the UE to receive the downlink reference signal from the one AP.

16. A user equipment (UE) receiving downlink data in a wireless communication system, the UE comprising:

a transmitter configured to transmit a radio signal;
a receiver configured to receive the radio signal;
at least one processor; and
at least one computer memory operably connectable to the at least one processor and configured to store instructions performing operations based on being executed by the at least one processor,
wherein the operations comprise:

transmitting, to each of at least one access point (AP) performing a joint transmission, an uplink reference signal used for a received signal phase estimation at each of the at least one AP;
receiving, from each of the at least one AP, a downlink reference signal based on an AP received signal phase value estimated based on the received signal phase estimation at each of the at least one AP;
transmitting, to each of the at least one AP, information on a UE received signal phase value estimated based on the received signal phase estimation based on the downlink reference signal; and
receiving, from each of the at least one AP, the downlink data based on (i) the AP received signal phase value and (ii) the UE received signal phase value.

17. A method of transmitting, by an access point (AP), downlink data in a wireless communication system, the method comprising:

receiving, from a user equipment (UE), an uplink reference signal used for a received signal phase estimation at the AP;
transmitting, to the UE, a downlink reference signal based on an AP received signal phase value estimated based on the received signal phase estimation at the AP;
receiving, from the UE, information on a UE received signal phase value estimated based on the received signal phase estimation based on the downlink reference signal; and
transmitting, to the UE, the downlink data based on (i) the AP received signal phase value and (ii) the UE received signal phase value.

18. An access point (AP) transmitting downlink data in a wireless communication system, the AP comprising:

a transmitter configured to transmit a radio signal;
a receiver configured to receive the radio signal;
at least one processor; and
at least one computer memory operably connectable to the at least one processor and configured to store instructions performing operations based on being executed by the at least one processor,
wherein the operations comprise:

receiving, from a user equipment (UE), an uplink reference signal used for a received signal phase estimation at the AP;
transmitting, to the UE, a downlink reference signal based on an AP received signal phase value estimated based on the received signal phase estimation at the AP;
receiving, from the UE, information on a UE received signal phase value estimated based on the received signal phase estimation based on the downlink reference signal; and
transmitting, to the UE, the downlink data based on (i) the AP received signal phase value and (ii) the UE received signal phase value.

19. A non-transitory computer readable medium (CRM) storing one or more instructions,
    wherein the one or more instructions executable by one or more processors are configured to allow a user equipment (UE) to:

    transmit, to each of at least one access point (AP) performing a joint transmission, an uplink reference signal used for a received signal phase estimation at each of the at least one AP;
    receive, from each of the at least one AP, a downlink reference signal based on an AP received signal phase value estimated based on the received signal phase estimation at each of the at least one AP;
    transmit, to each of the at least one AP, information on a UE received signal phase value estimated based on the received signal phase estimation based on the downlink reference signal; and
    receive, from each of the at least one AP, downlink data based on (i) the AP received signal phase value and (ii) the UE received signal phase value.

20. A device comprising:

    one or more memories; and
    one or more processors operably connected to the one or more memories,
    wherein the one or more processors are configured to allow the device to:

    transmit, to each of at least one access point (AP) performing a joint transmission, an uplink reference signal used for a received signal phase estimation at each of the at least one AP;
    receive, from each of the at least one AP, a downlink reference signal based on an AP received signal phase value estimated based on the received signal phase estimation at each of the at least one AP;
    transmit, to each of the at least one AP, information on a user equipment (UE) received signal phase value estimated based on the received signal phase estimation based on the downlink reference signal; and
    receive, from each of the at least one AP, downlink data based on (i) the AP received signal phase value and (ii) the UE received signal phase value.

【FIG. 1】

【FIG. 2】

【FIG. 3】

【FIG. 4】

Device(400)

Communication unit(410)
(e.g., 5G communication unit)

Communication circuit(412)
(e.g., processor(s),memory(s))

Transceiver(s)(414)
(e.g., RF unit(s),antenna(s))

Control unit(420)
(e.g., processor(s))

Memory unit(430)
(e.g., RAM, storage)

Additional components(440)
(e.g., power unit/battery,
I/O unit,driving unit,
computing unit)

【FIG. 5】

Power supply unit — 540a

500

508

Communication unit — 510

Control unit — 520

Memory unit — 530

I/O unit — 540c
Display — 540d

Interface unit — 540b

【FIG. 6】

INITIAL CELL SEARCH

SYSTEM INFORMATION RECEPTION

RANDOM ACCESS PROCEDURE

GENERAL DL/UL Tx/Rx

PSS-SSS& [DLRS]& PBCH
S611

PDCCH/ PDSCH (BCCH)
S612

PRACH
S613

PDCCH/ PDSCH
S614

PUSCH
S615

PDCCH/ PDSCH
S616

PDCCH/ PDSCH
S617

PUSCH/ PUCCH
S618

· DL/UL ACK/NACK
· UE CQI/PMI RI REPORT USING PUSCH AND PUCCH

32

**[FIG. 7]**

【FIG. 8】

Resource grid

1 RE

1 subcarrier

1 symbol

l=0 · · ·

k=0

A carrier

A BMP

1RB

【FIG. 9】

【FIG. 10】

【FIG. 11】

1110      1130

| Coherence Interval | Coherence Interval |
|---|---|

| Uplink Reference Signal | Downlink Data | Uplink Data |
|---|---|---|

1111     1113    1115

【FIG. 12】

1220            1230

AP1             AP2

$e^{j(2\pi f_c t + \varphi_1)}$          $e^{j(2\pi f_c t + \varphi_2)}$

$e^{j\theta_1}$         $e^{j\theta_2}$

1210

UE

$e^{-j(2\pi f_c t + \varphi_{UE})}$

[FIG. 13]

```
        ┌──────────────┐
        (    Start     )
        └──────┬───────┘
               │
               ▼
┌──────────────────────────────────────────────┐
│         UE transmits ref signal 1             │───S1310
└───────────────────┬──────────────────────────┘
                    │
                    ▼
┌──────────────────────────────────────────────┐
│ AP n receivers ref signal 1. AP n estimates   │
│ phase from the received Ref signal:           │───S1320
│ $\varphi_{AP\_n}=\varphi_{UE}-\varphi_n+\theta_n=-\Delta_n+\theta_n$ │
└───────────────────┬──────────────────────────┘
                    │
                    ▼
┌──────────────────────────────────────────────┐
│  AP n rotates ref signal 2 with the estimated │
│  phase $-\varphi_{AP\_n}$ and transmits it via │───S1330
│  orthogonal resources                         │
└───────────────────┬──────────────────────────┘
                    │
                    ▼
┌──────────────────────────────────────────────┐
│ UE receives the ref signal 2. UE estimates    │
│ phases from the received Ref signal 2:        │───S1340
│ $2(\varphi_n-\varphi_{UE})=2\Delta_n$         │
└───────────────────┬──────────────────────────┘
                    │
                    ▼
┌──────────────────────────────────────────────┐
│  UE reports estimated phases $2\Delta_n$ via  │
│  dedicated reporting channel                  │───S1350
└───────────────────┬──────────────────────────┘
                    │
                    ▼
┌──────────────────────────────────────────────┐
│ AP n decodes received reporting channel and   │───S1360
│ acquires $2\Delta_n$                          │
└───────────────────┬──────────────────────────┘
                    │
                    ▼
┌──────────────────────────────────────────────┐
│ AP n rotates signal by $-(2\Delta_n+\varphi_{AP\_n})=-(\Delta_n+\theta_n)$ │───S1370
│ and transmits signal                          │
└───────────────────┬──────────────────────────┘
                    │
                    ▼
┌──────────────────────────────────────────────┐
│  UE receives co-phased signals from all APs   │───S1380
└───────────────────┬──────────────────────────┘
                    │
                    ▼
             ┌──────────────┐
             (     End      )
             └──────────────┘
```

【FIG. 14】

【FIG. 15】

【FIG. 16】

【FIG. 17】

[FIG. 18]

$$\text{Start}$$

UE transmits ref signal 1 —— S1810

AP n receivers ref signal 1. AP n estimates phase from the received Ref signal: $\varphi_{AP\_n} = \Delta_{n,UL} + \theta_n$ —— S1820

AP n rotates ref signal 2 with the estimated phase $-\varphi_{AP\_n}$ and transmits it via orthogonal resources —— S1830

UE receives the ref signal 2. UE reports estimated phases $\Delta_{n,DL} - \Delta_{n,UL}$ —— S1840

UE reports estimated phases $\Delta_{n,DL} - \Delta_{n,UL}$ via dedicated reporting channel —— S1850

AP n decodes received reporting channel and acquires $\Delta_{n,DL} - \Delta_{n,UL}$ —— S1860

AP n rotates signal by $(\Delta_{n,UL} - \Delta_{n,DL}) - \varphi_{AP\_n} = -(\Delta_{n,DL} + \theta_n)$ and transmits signal —— S1870

UE receives co-phased signals from all APs —— S1880

$$\text{End}$$

【FIG. 19】

【FIG. 20】

【FIG. 21】

2120

AP1

$e^{j(2\pi f_c t + \varphi_1)} \rightarrow$

$e^{-j(\Delta_{1,DL} + \theta_1)}$

$e^{j\theta_1}$

2130

AP2

$\leftarrow e^{j(2\pi f_c t + \varphi_2)}$

$e^{-j(\Delta_{2,DL} + \theta_2)}$

$e^{j\theta_2}$

2110

UE

$\leftarrow e^{-j(2\pi f_c t + \varphi_{UE})}$

【FIG. 22】

2210  2230

| Large-scale Training | Coherence Interval | Coherence Interval |

| Ref1 | Ref2 | $\Delta_{n,DL}$ $\Delta_{n,UL}$ | Uplink Data | Downlink Data |

2211  2212  2213  2214  2215

[FIG. 23]

```
                    ( Start )
                        │
                        ▼
┌─────────────────────────────────────────────┐
│         AP transmits ref signal 1            │──── S2310
└─────────────────────────────────────────────┘
                        │
                        ▼
┌─────────────────────────────────────────────┐
│ UE receives ref signal 1. UE estimates phase │
│ from the received ref signal:                │──── S2320
│ $\varphi_{UE\_n} = \varphi_n - \varphi_{UE} + \theta_n = \Delta_n + \theta_n$ │
└─────────────────────────────────────────────┘
                        │
                        ▼
┌─────────────────────────────────────────────┐
│           UE transmits ref signal 2          │──── S2330
└─────────────────────────────────────────────┘
                        │
                        ▼
┌─────────────────────────────────────────────┐
│ AP n receivers the ref signal 2. AP n        │
│ estimates phase from the received Ref        │──── S2340
│ signal 2: $\varphi_{AP\_n} = -\Delta_n + \theta_n$ │
└─────────────────────────────────────────────┘
                        │
                        ▼
┌─────────────────────────────────────────────┐
│ UE reports estimated phases $\Delta_n + \theta_n$ │
│ via dedicated reporting channel              │──── S2350
└─────────────────────────────────────────────┘
                        │
                        ▼
┌─────────────────────────────────────────────┐
│ AP n decodes received reporting channel and  │
│ acquires $\Delta_n + \theta_n$               │──── S2360
└─────────────────────────────────────────────┘
                        │
                        ▼
┌─────────────────────────────────────────────┐
│ AP n acquires $(\Delta_n + \theta_n) - (-\Delta_n + \theta_n) = 2\Delta_n$ │──── S2370
└─────────────────────────────────────────────┘
                        │
                        ▼
┌─────────────────────────────────────────────┐
│ AP n rotates signal by $-(2\Delta_n + \varphi_{AP\_n}) = -(\Delta_n + \theta_n)$ │
│ and transmits signal                         │──── S2380
└─────────────────────────────────────────────┘
                        │
                        ▼
┌─────────────────────────────────────────────┐
│     UE receives co-phased signals from all APs │──── S2390
└─────────────────────────────────────────────┘
                        │
                        ▼
                    ( End )
```

【FIG. 24】

2410                              2430

| Large-scale Training | Coherence Interval | Coherence Interval |
|---|---|---|

| Ref1 | Ref2 | $\Delta_n + \theta_n$ | Uplink Data | Downlink Data |
|---|---|---|---|---|

2411   2412   2413   2414   2415

【FIG. 25】

```
                        ( Start )
                            │
                            ▼
┌───────────────────────────────────────────────────────┐
│  Transmit, to each of at least one access point (AP)   │
│  performing joint transmission, an uplink reference     │ ──── S2510
│  signal used for received signal phase estimation at   │
│  each of at least one AP                               │
└───────────────────────────────────────────────────────┘
                            │
                            ▼
┌───────────────────────────────────────────────────────┐
│  Receive, from each of at least one AP, a downlink     │
│  reference signal based on an AP received signal phase  │ ──── S2520
│  value estimated based on the received signal phase    │
│  estimation at each of at least one AP                 │
└───────────────────────────────────────────────────────┘
                            │
                            ▼
┌───────────────────────────────────────────────────────┐
│  Transmit, to each of at least one AP, information on a │
│  UE received signal phase value estimated based on the  │ ──── S2530
│  received signal phase estimation based on the downlink │
│  reference signal                                       │
└───────────────────────────────────────────────────────┘
                            │
                            ▼
┌───────────────────────────────────────────────────────┐
│  Receive, from each of at least one AP, downlink data  │
│  based on (i) the AP received signal phase value and   │ ──── S2540
│  (ii) the UE received signal phase value               │
└───────────────────────────────────────────────────────┘
                            │
                            ▼
                         ( End )
```

【FIG. 26】

```
                    ( Start )
                        |
                        v
+-------------------------------------------------+
| Receive, from a UE, an uplink reference signal  |        ~S2610
| used for received signal phase estimation at AP |
+-------------------------------------------------+
                        |
                        v
+-------------------------------------------------+
| Transmit, to the UE, a downlink reference       |
| signal based on an AP received signal phase     |        ~S2620
| value estimated based on the received signal    |
| phase estimation at the AP                      |
+-------------------------------------------------+
                        |
                        v
+-------------------------------------------------+
| Receive, from the UE, information on a UE       |
| received signal phase value estimated based on  |        ~S2630
| the received signal phase estimation based on   |
| the downlink reference signal                   |
+-------------------------------------------------+
                        |
                        v
+-------------------------------------------------+
| Transmit, to the UE, downlink data based on     |
| (i) the AP received signal phase value and      |        ~S2640
| (ii) the UE received signal phase value         |
+-------------------------------------------------+
                        |
                        v
                     ( End )
```

## INTERNATIONAL SEARCH REPORT

| International application No. |
| --- |
| **PCT/KR2022/009696** |

| A. | CLASSIFICATION OF SUBJECT MATTER |
| --- | --- |

**H04L 27/26**(2006.01)i; **H04L 5/00**(2006.01)i; **H04B 7/0413**(2017.01)i

According to International Patent Classification (IPC) or to both national classification and IPC

| B. | FIELDS SEARCHED |
| --- | --- |

Minimum documentation searched (classification system followed by classification symbols)

H04L 27/26(2006.01); H04J 3/06(2006.01); H04L 5/00(2006.01); H04L 5/02(2006.01); H04W 56/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 협력 전송(joint transmission), 상향링크 참조 신호(uplink reference signal), 하향 링크 참조 신호(downlink reference signal), 위상 추정(phase estimation), AP(access point)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y<br><br>A | EP 2755435 A1 (ZTE CORPORATION) 16 July 2014 (2014-07-16)<br>See paragraphs [0002], [0047] and [0049]; and claims 1, 5, 7 and 17. | 1-3,15-20<br><br>4-14 |
| Y | US 2017-0280444 A1 (DA SILVA, Claudio et al.) 28 September 2017 (2017-09-28)<br>See paragraphs [0074]-[0075]. | 1-3,15-20 |
| A | US 2021-0219254 A1 (HUAWEI TECHNOLOGIES CO., LTD.) 15 July 2021 (2021-07-15)<br>See paragraphs [0049]-[0081]; and figure 2. | 1-20 |
| A | US 2020-0037275 A1 (MEDIATEK SINGAPORE PTE. LTD.) 30 January 2020 (2020-01-30)<br>See paragraphs [0033]-[0034]. | 1-20 |
| A | KR 10-2021-0113412 A (LG ELECTRONICS INC.) 15 September 2021 (2021-09-15)<br>See paragraphs [0468]-[0484]. | 1-20 |

☐ Further documents are listed in the continuation of Box C.       ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 March 2023** | **28 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/009696**

| Patent document cited in search report | | | Publication date (day/month/year) | Patent family member(s) | | | Publication date (day/month/year) |
|---|---|---|---|---|---|---|---|
| EP | 2755435 | A1 | 16 July 2014 | BR | 112014008313 | A2 | 11 April 2017 |
| | | | | BR | 112014008313 | B1 | 05 July 2022 |
| | | | | CN | 103037519 | A | 10 April 2013 |
| | | | | EP | 2755435 | B1 | 28 February 2018 |
| | | | | IN | 2792CHN2014 | A | 03 July 2015 |
| | | | | JP | 2014-531171 | A | 20 November 2014 |
| | | | | RU | 2014117370 | A | 20 November 2015 |
| | | | | RU | 2581657 | C2 | 20 April 2016 |
| | | | | WO | 2013-053242 | A1 | 18 April 2013 |
| US | 2017-0280444 | A1 | 28 September 2017 | WO | 2017-165006 | A2 | 28 September 2017 |
| | | | | WO | 2017-165006 | A3 | 26 July 2018 |
| US | 2021-0219254 | A1 | 15 July 2021 | CN | 110971326 | A | 07 April 2020 |
| | | | | CN | 110971326 | B | 16 July 2021 |
| | | | | EP | 3832913 | A1 | 09 June 2021 |
| | | | | WO | 2020-063393 | A1 | 02 April 2020 |
| US | 2020-0037275 | A1 | 30 January 2020 | CN | 110784875 | A | 11 February 2020 |
| | | | | TW | 202008815 | A | 16 February 2020 |
| | | | | TW | I694734 | B | 21 May 2020 |
| | | | | US | 11096132 | B2 | 17 August 2021 |
| KR | 10-2021-0113412 | A | 15 September 2021 | CN | 113439412 | A | 24 September 2021 |
| | | | | EP | 3920458 | A1 | 08 December 2021 |
| | | | | US | 2023-0047906 | A1 | 16 February 2023 |
| | | | | WO | 2020-167077 | A1 | 20 August 2020 |

Form PCT/ISA/210 (patent family annex) (July 2022)